# EUROPEAN PATENT SPECIFICATION

(11) **EP 4 057 551 B1**
(45) Date of publication and mention of the grant of the patent: **19.02.2025**
(21) Application number: 19952070.1
(22) Date of filing: 07.11.2019
(51) Int. Cl.: H04L 5/00, H04L 1/00, H04W 72/12

(54) **DOWNLINK CONTROL INFORMATION CONFIGURATION METHOD AND APPARATUS, AND COMMUNICATION DEVICE AND STORAGE MEDIUM**
VERFAHREN UND VORRICHTUNG ZUR KONFIGURATION VON DOWNLINK-STEUERUNGSINFORMATIONEN, KOMMUNIKATIONSVORRICHTUNG UND SPEICHERMEDIUM
PROCÉDÉ ET APPAREIL DE CONFIGURATION D'INFORMATIONS DE COMMANDE DE LIAISON DESCENDANTE ET DISPOSITIF DE COMMUNICATION ET SUPPORT DE STOCKAGE

(43) Date of publication of application: 14.09.2022
(73) Proprietor: Beijing Xiaomi Mobile Software Co., Ltd., Beijing 100085 (CN)
(72) Inventor: MU, Qin, Beijing 100085 (CN)
(74) Representative: dompatent von Kreisler Selting Werner - Partnerschaft von Patent- und Rechtsanwälten mbB
(86) International application number: PCT/CN2019/116392
(87) International publication number: WO 2021/087906

(56) References cited:
- CN-A- 105 763 307
- CN-A- 109 257 819
- CN-A- 109 361 496
- US-A1- 2019 274 032
- ZTE: "Consideration on scheduling enhancement for MTC", vol. RAN WG1, no. Chongqing, China; 20191014 - 20191018, 5 October 2019 (2019-10-05), XP051808458, Retrieved from the Internet <URL:https://ftp.3gpp.org/tsg_ran/WG1_RL1/TSGR1_98b/Docs/R1-1910264.zip R1-1910264 scheduling enhancement for MTC final.docx> [retrieved on 20191005]
- QUALCOMM INCORPORATED: "DCI for eMTC", vol. RAN WG1, no. Anaheim, USA; 20151115 - 20151122, 15 November 2015 (2015-11-15), XP051003328, Retrieved from the Internet <URL:http://www.3gpp.org/ftp/Meetings_3GPP_SYNC/RAN1/Docs/> [retrieved on 20151115]
- SAMSUNG: "Discussion on sub-PRB allocation for eFeMTC", vol. RAN WG1, no. Prague, CZ; 20171009 - 20171013, 8 October 2017 (2017-10-08), XP051340753, Retrieved from the Internet <URL:http://www.3gpp.org/ftp/Meetings_3GPP_SYNC/RAN1/Docs/> [retrieved on 20171008]
- HUAWEI ET AL: "Scheduling multiple DL/UL transport blocks", vol. RAN WG1, no. Xi'an, China; 20190408 - 20190412, 7 April 2019 (2019-04-07), XP051699344, Retrieved from the Internet <URL:http://www.3gpp.org/ftp/Meetings%5F3GPP%5FSYNC/RAN1/Docs/R1%2D1903911%2Ezip> [retrieved on 20190407]

## Description

### TECHNICAL FIELD

The disclosure relates to, but is not limited to, a field of wireless communication technologies, and more particularly, to a method and an apparatus for configuring downlink control information, a communication device, and a storage medium.

### BACKGROUND

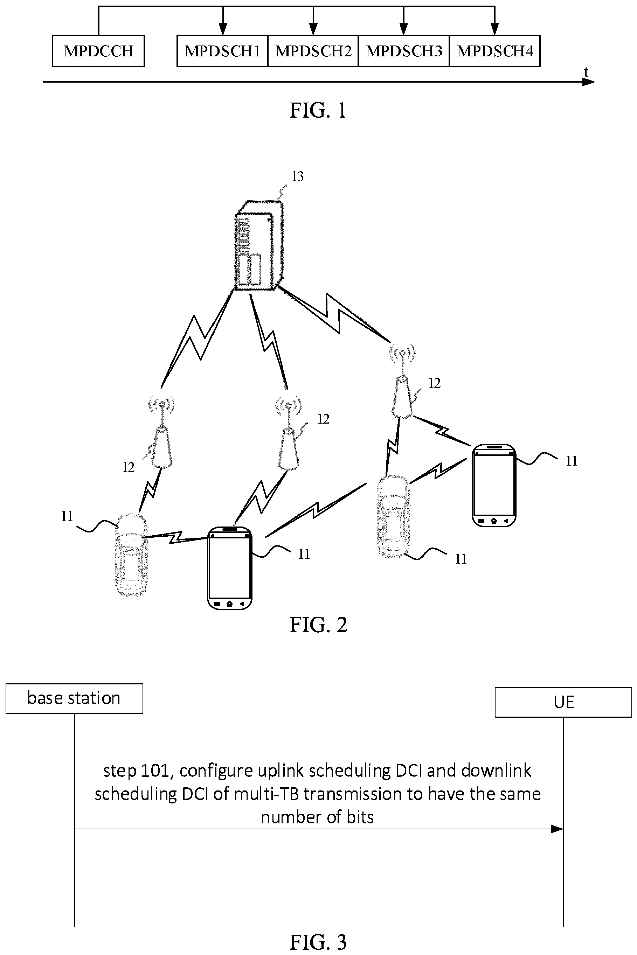

For a Machine Type Communication (MTC) system, as illustrated in FIG. 1, the 3rd Generation Partnership Project (3GPP) release 16 proposes adopting one MTC Physical Downlink Control Channel (MPDCCH) to continuously schedule multiple MTC Physical Downlink Shared Channels (MPDSCH). That is, one Downlink Control Information (DCI) can be adopted to schedule multiple Transmission Blocks (TB) for transmission, which is called multi-TB scheduling.

In the MTC coverage enhancement mode A, one DCI can schedule up to 8 downlink TBs for transmission. In the coverage enhancement mode B, one DCI can schedule up to 4 downlink TBs for transmission. The content of the DCI for the multi-TB scheduling is also different from the content of the traditional DCI. For example, the DCI for the multi-TB scheduling may include the specific number of scheduled TBs, as well as the content of the traditional DCI, such as the resource allocation field, the number of Hybrid Automatic Repeat reQuest (HARQ) processes, the New Data Indicator (NDI), etc.

ZTE: "Consideration on scheduling enhancement for MTC", 3GPP DRAFT; R1-1910264, 3^{rd} Generation Partnership Project (3GPP), Mobile Competence Center, provides related contents.

### SUMMARY

In view of this, embodiments of the disclosure provide a method for configuring downlink control information according to independent claim 1, a method for receiving downlink control information according to independent claim 5, a base station for configuring downlink control information according to independent claim 9, an UE for receiving downlink control information according to independent claim 10, and a storage medium according to independent claim 14. Further aspects of the present application are defined by the dependent claims.

According to a first aspect of the embodiments of the disclosure, a method for configuring downlink control information is provided, performed by a base station. The method includes:
configuring an uplink scheduling Downlink Control Information (DCI) and a downlink scheduling DCI of multi-Transmission Block (TB) transmission to have the same number of bits;
the method further includes: determining a configuring manner for configuring the uplink scheduling DCI and the downlink scheduling DCI to have the same number of bits; and
in which configuring (101) the uplink scheduling DCI and the downlink scheduling DCI of the multi-TB transmission to have the same number of bits includes:
   adding m bits having a preset value at predetermined positions to a shorter one having the smaller number of bits and selected from a configured uplink scheduling DCI and a configured downlink scheduling DCI, such that the number of bits of the uplink scheduling DCI is the same as the number of bits of the downlink scheduling DCI.

Optionally, determining the configuring manner for configuring the uplink scheduling DCI and the downlink scheduling DCI to have the same number of bits includes:
determining the configuring manner based on an indication information, in which the indication information is sent by a user equipment (UE) or by a network element of a core network.

Optionally, according to the configuring manner, configuring the uplink scheduling DCI and the downlink scheduling DCI for the multi-TB transmission to have the same number of bits includes:
according to a first configuring manner, configuring the uplink scheduling DCI and the downlink scheduling DCI of the multi-TB transmission to have the same number of bits based on the larger of a maximum uplink TB transmitting number and a maximum downlink TB transmitting number supported by the UE reported by the UE;
   or,
according to a second configuring manner, configuring the uplink scheduling DCI and the downlink scheduling DCI of the multi-TB transmission to have the same number of bits based on the larger of a maximum uplink TB transmitting number and a maximum downlink TB transmitting number set by a base station for the UE.

Optionally, according to the configuring method, configuring the uplink scheduling DCI and the downlink scheduling DCI of the multi-TB transmission to have the same number of bits includes:
according to a third configuring manner, for the uplink scheduling DCI configured based on the maximum uplink TB transmitting number supported by the UE reported by the UE and for the downlink scheduling DCI configured based on the maximum downlink TB transmitting number supported by the UE reported by the UE, adding n bits having a preset value at predetermined positions of a shorter one having the smaller number of bits and selected from a configured uplink scheduling DCI and a configured downlink scheduling DCI, such that the number of bits of the uplink scheduling DCI is the same as the number of bits of the downlink scheduling DCI;
   or,
according to a fourth configuring manner, for the uplink scheduling DCI configured based on the maximum uplink TB transmitting number set by a base station for the UE and for the downlink scheduling DCI configured based on the maximum downlink TB transmitting number set by the base station for the UE, adding m bits having a preset value at predetermined positions to a shorter one having the smaller number of bits and selected from a configured uplink scheduling DCI and a configured downlink scheduling DCI, such that the number of bits of the uplink scheduling DCI is the same as the number of bits of the downlink scheduling DCI.

According to a second aspect of the embodiments of the disclosure, a method for receiving downlink control information is provided, performed by a user equipment (UE). The method includes:
based on a preset blind detection bit number, performing blind detection on the uplink scheduling DCI and the downlink scheduling DCI of the multi-TB transmission, in which the uplink scheduling DCI and the downlink scheduling DCI have the same number of bits;
the number of bits of the uplink scheduling DCI is the same as the number of bits of the downlink scheduling DCI by adding m bits having a preset value at predetermined positions to a shorter one having the smaller number of bits and selected from a configured uplink scheduling DCI and a configured downlink scheduling DCI.

Optionally, the method further includes:
determining the preset blind detection bit number based on the larger of a maximum uplink TB transmitting number and a maximum downlink TB transmitting number supported by the UE reported by the UE to the base station;
   or,
determining the preset blind detection bit number based on the larger of a maximum uplink TB transmitting number and a maximum downlink TB transmitting number set by the base station for the UE.

Optionally, determining the preset blind detection bit number based on the larger of the maximum uplink TB transmitting number and the maximum downlink TB transmitting number supported by the UE reported by the UE to the base station includes:
for the uplink scheduling DCI configured based on the maximum uplink TB transmitting number supported by the UE reported by the UE and for the downlink scheduling DCI configured based on the maximum downlink TB transmitting number supported by the UE reported by the UE, determining the preset blind detection bit number based on the larger of the maximum uplink TB transmitting number and the maximum downlink TB transmitting number supported by the UE;
   or,
for the uplink scheduling DCI configured based on the maximum uplink TB transmitting number set by the base station for the UE and for the downlink scheduling DCI configured based on the maximum downlink TB transmitting number set by the base station for the UE, determining the preset blind detection bit number based on the larger of the maximum uplink TB transmitting number and the maximum downlink TB transmitting number set by the base station for the UE.

Optionally, the method further includes:
removing i bits at predetermined positions of the uplink scheduling DCI, and reading data content of the uplink scheduling DCI from which the i bits are removed;
   or,
removing j bits at predetermined positions of the downlink scheduling DCI, and reading data content of the downlink scheduling DCI from which the j bits are removed.

According to a third aspect of embodiments of the disclosure, there is provided a base station for configuring downlink control information. The base station includes a setting module,
in which the setting module is configured to configure an uplink scheduling DCI and a downlink scheduling DCI of multi-TB transmission to have the same number of bits;
the base station further includes a first determining module configured to determine a configuring manner for configuring the uplink scheduling DCI and the downlink scheduling DCI to have the same number of bits;
the setting module (110) comprises a setting submodule configured to: according to the configuring manner, configure the uplink scheduling DCI and the downlink scheduling DCI of the multi-TB transmission to have the same number of bits; and
the setting submodule is further configured to:
   add m bits having a preset value at predetermined positions to a shorter one having the smaller number of bits and selected from a configured uplink scheduling DCI and a configured downlink scheduling DCI, such that the number of bits of the uplink scheduling DCI is the same as the number of bits of the downlink scheduling DCI.

Optionally, the first determining module includes:
a first determination submodule, configured to determine the configuring manner based on indication information, in which the indication information is sent by the UE or sent by a network element of a core network.

Optionally, the setting submodule includes:
a first setting unit, configured to according to a first configuring manner, configure the uplink scheduling DCI and the downlink scheduling DCI of the multi-TB transmission to have the same number of bits based on the larger of the maximum uplink TB transmitting number and the maximum downlink TB transmitting number supported by the UE reported by the UE;
   or,
a second setting unit, configured to, according to a second configuring manner, configure the uplink scheduling DCI and the downlink scheduling DCI of the multi-TB transmission to have the same number of bits based on the larger of the maximum uplink TB transmitting number and the maximum downlink TB transmitting number set by the base station for the UE.

Optionally, the setting submodule includes:
a third setting unit configured to, according to a third configuring manner, for the uplink scheduling DCI configured based on the maximum uplink TB transmitting number supported by the UE reported by the UE and for downlink scheduling DCI configured based on the maximum downlink TB transmitting number supported by the UE reported by the UE, add n bits having a preset value at predetermined positions of a shorter one having the smaller number of bits and selected from a configured uplink scheduling DCI and a configured downlink scheduling DCI, such that the number of bits of the uplink scheduling DCI is the same as the number of bits of the downlink scheduling DCI;
   or
a fourth setting unit, configured to, according to a fourth configuring manner, for the uplink scheduling DCI configured based on the maximum uplink TB transmitting number set by the base station for the UE and for the downlink scheduling DCI configured based on the maximum downlink TB transmitting number set by the base station for the UE, add m bits having a preset value at predetermined positions of a shorter one having the smaller number of bits and selected from a configured uplink scheduling DCI and a configured downlink scheduling DCI, such that the number of bits of the uplink scheduling DCI is the same as the number of bits of the downlink scheduling DCI.

According to a fourth aspect of the embodiments of the disclosure, there is provided a user equipment (UE) for receiving downlink control information. The UE includes:
a blind detection module, configured to perform blind detection on an uplink scheduling DCI and a downlink scheduling DCI of multi-TB transmission based on a preset blind detection bit number, in which the uplink scheduling DCI and the downlink scheduling DCI have the same number of bits;
the number of bits of the uplink scheduling DCI is the same as the number of bits of the downlink scheduling DCI by adding m bits having a preset value at predetermined positions to a shorter one having the smaller number of bits and selected from a configured uplink scheduling DCI and a configured downlink scheduling DCI.

Optionally, the UE further includes:
a second determining module, configured to determine the preset blind detection bit number based on the larger of a maximum uplink TB transmitting number and a maximum downlink TB transmitting number supported by the UE reported by the UE to the base station;
   or,
a third determining module, configured to determine the preset blind detection bit number based on the larger of the maximum uplink TB transmitting number and the maximum downlink TB transmitting number set by the base station for the UE.

Optionally, the second determining module includes:
a second determining submodule, configured to for the uplink scheduling DCI configured based on the maximum uplink TB transmitting number supported by the UE reported by the UE and for the downlink scheduling DCI configured based on the maximum downlink TB transmitting number supported by the UE reported by the UE, determine the preset blind detection bit number based on the larger of the maximum uplink TB transmitting number and the maximum downlink TB transmitting number supported by the UE;
   or,
a third determining submodule, configured to for the uplink scheduling DCI configured based on the maximum uplink TB transmitting number set by the base station for the UE and for the downlink scheduling DCI configured based on the maximum downlink TB transmitting number set by the base station for the UE, determine the preset blind detection bit number based on the larger of the maximum uplink TB transmitting number and the maximum downlink TB transmitting number set by the base station for the UE.

Optionally, the UE further includes:
a first reading module, configured to remove i bits at predetermined positions of the uplink scheduling DCI, and read data content of the uplink scheduling DCI from which the i bits are removed;
   or,
a second reading module, configured to remove j bits at predetermined positions of the downlink scheduling DCI, and read data content of the downlink scheduling DCI from which the j bits are removed.

According to a fifth aspect of the embodiments of the disclosure, there is provided a storage medium on which executable programs are stored. When the executable programs are executed by a processor, the method for configuring downlink control information as described in the first aspect or the method for receiving downlink control information described in the second aspect is implemented.

With the method for configuring downlink control information, the base station, the UE, the communication device, and the storage medium according to embodiments of the disclosure, the same number of bits are set for the uplink scheduling DCI and the downlink scheduling DCI of the multi-TB transmission. **In** this way, when the UE performs DCI decoding, there is no need to respectively perform the blind detection on the uplink scheduling DCI and the downlink scheduling DCI with different blind detection bit numbers since the number of bits of the uplink scheduling DCI is different from the number of bits of the downlink scheduling DCI, and the blind detection can be performed on the uplink scheduling DCI and the downlink scheduling DCI by adopting the same blind detection bit number, thereby reducing the number of times of obtaining a matched blind detection bit number used for perform the blind detection and improving the blind detection efficiency.

### BRIEF DESCRIPTION OF THE DRAWINGS

The accompanying drawings, which are incorporated in and constitute a part of this specification, illustrate embodiments consistent with the disclosure and together with the description serve to explain the principles of the embodiments of the disclosure.
FIG. 1 is schematic diagram illustrating multi-TB scheduling in accordance with an embodiment.
FIG. 2 is a schematic diagram illustrating a wireless communication system in accordance with an embodiment.
FIG. 3 is a flowchart illustrating a method for configuring downlink control information in accordance with an embodiment.
FIG. 4 is a flowchart illustrating a method for receiving downlink control information in accordance with an embodiment.
FIG. 5 is a block diagram illustrating an apparatus for configuring downlink control information in accordance with an embodiment.
FIG. 6 is a block diagram illustrating an apparatus for receiving downlink control information in accordance with an embodiment.
FIG. 7 is a block diagram illustrating an apparatus for configuring downlink control information in accordance with an embodiment.

### DETAILED DESCRIPTION

Here, embodiments will be described in detail, and examples thereof are shown in the drawings. When the following description relates to the drawings, unless otherwise indicated, the same numbers in different drawings represent the same or similar elements.

The terms used in embodiments of the disclosure are only for the purpose of describing specific embodiments and are not intended to limit embodiments of the disclosure. The singular forms "one", "said" and "this" used in embodiments of the disclosure and the appended claims are also intended to include most forms, unless the context clearly indicates other meanings. It should also be understood that the term "and/or" as used herein refers to and includes any or all possible combinations of one or more associated listed items.

It is understood that although terms, such as first, second, third, etc. may be used to describe various information in embodiments of the disclosure, such information should not be limited to these terms. These terms are only used to distinguish the same type of information from each other. For example, without departing from the scope of the embodiments of the disclosure, the first information may also be referred to as the second information, and similarly, the second information may also be referred to as the first information. Depending on the context, the word "if" as used herein can be interpreted as "when" or "based on" or "in response to ".

FIG. 2 is a schematic diagram illustrating a wireless communication system in accordance with an embodiment, which is not according to the present invention and is presented for illustration purposes only. As illustrated in FIG. 2, the wireless communication system is a communication system based on cellular mobile communication technology. The wireless communication system may include several terminals 11 and several base stations 12.

The terminal 11 may be a device that provides voice and/or data connectivity to the user. The terminal 11 may communicate with one or more core networks via a Radio Access Network (RAN). The terminal 11 may be an Internet of Thing (IoT) terminal such as a sensor device, a mobile phone (or "cellular" phone), or a computer with an IoT terminal, such as a fixed device, a portable device, a pocket device, a hand-held device, a computer built-in device or a vehicle-mounted device. For example, Station (STA), subscriber unit, subscriber station, mobile station, mobile, remote station, access point, remote terminal, access terminal, user terminal, user agent, user device, or user equipment (UE). Alternatively, the terminal 11 may be a device of unmanned aerial vehicle. Alternatively, the terminal 11 may be a vehicle-mounted device, such as a trip computer with a wireless communication function, or a wireless communication device externally connected to the trip computer. Alternatively, the terminal 11 may be a roadside device, such as a street light, a traffic light, or other roadside devices with a wireless communication function.

The base station 12 may be a network-side device in the wireless communication system. The wireless communication system may be the 4^{th} generation mobile communication (4G) system, also known as Long Term Evolution (LTE) system. Alternatively, the wireless communication system may be a 5^{th} generation mobile communication (5G) system, also known as new radio (NR) system or 5G NR system. Alternatively, the wireless communication system may be a next-generation system of the 5G system. The access network in the 5G system may be called New Generation-Radio Access Network (NG-RAN). Alternatively, the wireless communication system can be a Machine Type Communication (MTC) system.

The base station 12 may be an evolved base station (eNB) of the 4G system. Alternatively, the base station 12 may be a base station (gNB) that adopts a centralized-distributed architecture of the 5G system. When adopting the centralized-distributed architecture, the base station 12 usually includes a central unit (CU) and at least two distributed units (DU). The central unit is provided with a protocol stack of Packet Data Convergence Protocol (PDCP), Radio Link Control (RLC), and Medium Access Control (MAC). The distributed unit is provided with a protocol stack of a physical (PHY) layer. Embodiments of the disclosure not limit the implementation form of the base station 12.

A wireless connection can be established between the base station 12 and the terminal 11 through a wireless air interface. In different implementations, the wireless air interface can be a wireless air interface based on the 4G or based on 5G, such as the wireless air interface or the new radio, or the wireless air interface can be a wireless air interface based on the next-generation of the 5G.

In some examples, an E2E (End to End) connection can be established between terminals 11. For example, Vehicle to Vehicle (V2V) communication, Vehicle to Infrastructure (V2I) and Vehicle to Pedestrian (V2P) communication in the Vehicle to Everything (V2X) communication.

In some examples, the above wireless communication system may also include a network management device 13.

The base stations 12 are respectively connected to the network management device 13. The network management device 13 may be a core network device in the wireless communication system. As an example, the network management device 13 may be a Mobility Management Entity (MME) in an Evolved Packet Core (EPC). As another example, the network management device can be another core network device, such as Serving GateWay (SGW), Public Data Network GateWay (PGW), Policy and Charging Rules Function (PCRF), or Home Subscriber Sserver (HSS), etc. Embodiments of the disclosure do not limit the implementation form of the network management device 13.

The execution subject involved in the embodiments of the disclosure includes, but is not limited to, the terminal or the base station in the wireless communication system.

An application scenario of embodiments of the disclosure is that the UE needs to send a maximum support number of uplink transmission blocks (TBs) and a maximum support number of downlink TBs to the base station, since the UE has different uplink and downlink support capabilities. Depending on different TB transmission capabilities, the base station may configure the UE with the maximum TB transmitting number.

The number of bits of the DCI varies depending on the configured maximum TB scheduling number. That is, when the maximum TB scheduling number of TBs scheduled using the uplink scheduling DCI is different from the maximum TB scheduling number of TBs scheduled using the downlink scheduling DCI, the number of bits of the uplink scheduling DCI is different from the number of bits of the downlink scheduling DCI.

The difference between the uplink scheduling DCI and the downlink scheduling DCI in the number of bits causes the need to perform the blind detection on the uplink scheduling DCI and the downlink scheduling DCI respectively based on possible candidate blind detection bit numbers of DCI when performing the Physical Downlink Control Channel (PDCCH) blind detection. Since there are multiple candidate blind detection bit numbers, in performing the blind detection based on the multiple candidate blind detection bit numbers, the number of times of operations required for obtaining a matched candidate blind detection bit number is large, which increases the complexity and power consumption from the perspective of users.

As illustrated in FIG. 3, a method for configuring downlink control information is provided in accordance with an embodiment. The method for configuring downlink control information is applied to a base station of wireless communication. The method includes the following.

At step 101, an uplink scheduling Downlink Control Information (DCI) and a downlink scheduling DCI of multi-Transmission Block (TB) transmission are configured to have the same number of bits.

The DCI is sent by the base station to the UE and information indicated by the DCI includes uplink and downlink resource allocation, and/or Hybrid Automatic Repeat Request (HARQ) information, and/or power control, etc. The base station sets the number of bits for the uplink scheduling DCI and the downlink scheduling DCI. The uplink scheduling DCI refers to a DCI for scheduling multiple uplink TBs for transmission. The downlink scheduling DCI refers to a DCI for scheduling multiple downlink TBs for transmission. The DCI may be sent to the UE by a base station supporting the Machine Type Communication (MTC) using PDCCH resources, where the PDCCH may be an MTC Physical Downlink Control Channel (MPDCCH).

The UE sends its own supported maximum uplink TB transmitting number and maximum downlink TB transmitting number to the base station. As another example, the base station sets the maximum uplink TB transmitting number and the maximum downlink TB transmitting number for the UE based on conditions such as actual transmission capability. When scheduling the TBs, information of actually scheduled TBs is carried in the uplink scheduling DCI or the downlink scheduling DCI and sent to the UE. Generally, the number of uplink TBs scheduled by the base station is less than or equal to the maximum uplink TB transmitting number set by the base station, and the number of downlink TBs scheduled by the base station is less than or equal to the maximum downlink TB transmitting number set by the base station.

The base station can generate the uplink scheduling DCI and the downlink scheduling DCI based on the maximum uplink TB transmitting number set by the base station and the maximum downlink TB transmitting number set by the base station that is different from the maximum uplink TB transmitting number set by the base station. The generated DCI may include a new data indicator (NDI) and a HARQ process number of each TB. Therefore, for the maximum uplink TB transmitting number set by the base station and the maximum downlink TB transmitting number set by the base station that is different from the maximum uplink TB transmitting number set by the base station, the number of bits occupied by the uplink scheduling DCI and the downlink scheduling DCI are different.

Due to the difference between the uplink and downlink transmission capabilities, the maximum uplink TB transmitting number set by the base station is generally different from the maximum downlink TB transmitting number set by the base station. Therefore, the number of bits respectively set for the uplink scheduling DCI and the downlink scheduling DCI based on the maximum uplink TB transmitting number and the maximum downlink TB transmitting number that is different from the maximum uplink TB transmitting number are different from each other.

The base station sends the uplink scheduling DCI and the downlink scheduling DCI through the PDCCH resources, and the UE receives the uplink scheduling DCI and the downlink scheduling DCI on the PDCCH resources. The way that the UE receives the uplink scheduling DCI and the downlink scheduling DCI is performing blind detection on the uplink scheduling DCI and the downlink scheduling DCI on the PDCCH resources through channel decoding. The UE performs the blind detection on the DCIs based on the blind detection bit number.

Here, the base station sets the number of bits of the uplink scheduling DCI to be the same as the number of bits of the downlink scheduling DCI. The uplink scheduling DCI and the downlink scheduling DCI have the same number of bits by increasing the number of bits of a shorter of the uplink scheduling DCI and the downlink scheduling DCI through adding redundant bits. Alternatively, the uplink scheduling DCI can have the same number of bits as the downlink scheduling DCI by adopting a way of the fixed number of bits for the DCI.

The way that the base station sets the number of bits for the DCI may include: configuring the DCI based on the number of TBs, that is, carrying indication information such as the NDI and the HARQ process number of each TB in the DCI based on the number of TBs. As another example, the way that the base station sets the number of bits for the DCI may include: adjusting the number of bits for the DCI by additionally adding bits after configuring the DCI based on the number of TBs.

When the UE performs the blind detection on the DCI, since the number of bits of the uplink scheduling DCI is the same as the number of bits of the downlink scheduling DCI, the UE determines the number of bits of the uplink scheduling DCI or the number of bits of the downlink scheduling DCI as the preset blind detection bit number, and adopts the same preset blink detection bit number to perform the blind detection on the DCI, without adopting two different blind detection bit numbers to respectively perform the blind detection.

In this way, when the UE performs the DCI decoding, there is no need to adopt different blind detection bit numbers to perform the blind detection respectively on the uplink scheduling DCI and the downlink scheduling DCI since the number of bits of the uplink scheduling DCI is different from the number of bits of the downlink scheduling DCI, and the blind detection can be performed on the uplink scheduling DCI and the downlink scheduling DCI by adopting the same blind detection bit number, thereby reducing the number of times of operations required for obtaining the matched blink detection bit number by the UE, and improving blind detection efficiency.

The method further comprises: determining a configuring manner for configuring the uplink scheduling DCI and the downlink scheduling DCI to have the same number of bits.

Configuring the uplink scheduling DCI and the downlink scheduling DCI of multi-TB transmission to have the same number of bits includes: according to the configuring manner, configuring the uplink scheduling DCI and the downlink scheduling DCI of the multi-TB transmission to have the same number of bits.

There may be various manners for setting the number of bits for the DCI, for example, directly adding bits to the DCI, or using a fixed number of bits of DCI, and so on.

The base station and the UE may negotiate the configuring manner for setting the number of bits for the DCI in advance or determine the configuring manner for setting the number of bits for the DCI through an external instruction.

The configuring manner for setting the number of bits for the DCI may be determined based on the maximum uplink TB transmitting number and the maximum downlink TB transmitting number supported by the UE, or the maximum uplink TB transmitting number and the maximum downlink TB transmitting number set by the base station for the UE.

Determining the configuring manner for configuring the uplink scheduling DCI and the downlink scheduling DCI to have the same number of bits includes determining the configuring manner based on indication information. The indication information is sent by the UE or sent by a network element of a core network.

The indication information may be delivered by the core network, and the base station determines the configuring manner for determining the number of bits of the DCI based on the indication information.

In some embodiments, the UE sends the indication information to the base station, and the base station determines the configuring manner for setting the number of bits of the DCI based on the indication information.

In an embodiment, according to the configuring manner, configuring the uplink DCI and the downlink scheduling DCI of the multi-TB transmission to have the same number of bits includes: according to a first configuring method, configuring the uplink scheduling DCI and the downlink scheduling DCI of the multi-TB transmission to have the same number of bits based on the larger of the maximum uplink TB transmitting number and the maximum downlink TB transmitting number supported by the UE reported by the UE.

The base station may determine the larger of the maximum uplink TB transmitting number and the maximum downlink TB transmitting number supported by the UE reported by the UE as the number of TBs to be used for configuring the uplink scheduling DCI and the downlink scheduling DCI.

The number of TBs actually scheduled by the base station subsequently is less than or equal to the larger of the maximum uplink TB transmitting number supported by the UE and the maximum downlink TB transmitting number supported by the UE. Therefore, setting the number of bits based on the larger of the maximum support number of uplink TBs and the maximum support number of downlink TBs will not affect subsequent actual scheduling of TBs. When actually scheduling the TBs, the base station can set information of each TB in the uplink scheduling DCI or the downlink scheduling DCI based on the actual requirements, and send the uplink scheduling DCI or downlink scheduling DCI on which the setting of the information of the TBs is completed to the UE.

The base station and the UE negotiate in advance to use the first configuring manner to configure the uplink scheduling DCI and the downlink scheduling DCI. Therefore, the UE can estimate the number of bits of the DCI based on the larger of the maximum uplink TB transmitting number and the maximum downlink TB transmitting number supported by the UE reported by the UE, and takes the estimated number of bits as the preset blind detection bit number to perform the blind detection on the uplink scheduling DCI and downlink scheduling DCI on the PDCCH.

For example, the maximum uplink TB transmitting number supported by the UE reported by the UE is 8, the maximum downlink TB transmitting number supported by the UE reported by the UE is 4, the maximum uplink TB transmitting number set by the base station is 4, and the maximum downlink TB transmitting number set by the base station is 2. **In** this case, the base station can configure the uplink scheduling DCI and the downlink scheduling DCI based on the maximum uplink TB transmitting number reported by the UE.

The UE also estimates the number of bits of the DCI based on the maximum uplink TB transmitting number reported by the UE, and takes the estimated number of bits as the preset blind detection bit number to perform the blind detection on the uplink scheduling DCI and downlink scheduling DCI on the PDCCH.

When performing the TB scheduling, the base station configures the uplink scheduling DCI and the downlink scheduling DCI to include the NDI and HARQ process number of the actually scheduled TBs, and sends the uplink scheduling DCI and the downlink scheduling DCI to the UE. The UE receives or sends the TBs based on the number of actually scheduled TBs.

In an embodiment, according to the configuring manner, configuring the uplink scheduling DCI and the downlink scheduling DCI of the multi-TB transmission to have the same number of bits includes: according to a second configuring manner, configuring the uplink scheduling DCI and the downlink scheduling DCI of the multi-TB transmission to have the same number of bits based on the larger of the maximum uplink TB transmitting number and the maximum downlink TB transmitting number set by the base station for the UE.

The base station may use the larger of the maximum uplink TB transmitting number and the maximum downlink TB transmitting number set by the base station as the number of TBs used for configuring the uplink scheduling DCI and the downlink scheduling DCI.

The number of actually scheduled TBs by the base station subsequently is less than or equal to the larger of the maximum uplink TB transmitting number and the maximum downlink TB transmitting number set by the base station. Therefore, setting the number of bits for the DCI based on the larger of the maximum uplink TB transmitting number and the maximum downlink TB transmitting number set by the base station will not affect the subsequent actual scheduling of TBs. When actually scheduling the TBs, the base station may set the information of each TB in the uplink scheduling DCI or the downlink scheduling DCI based on the actual requirements, and send the uplink scheduling DCI or downlink scheduling DCI on which the setting of the information of the TBs is completed to the UE.

The base station and the UE negotiate in advance to use the second configuring manner to configure the uplink scheduling DCI and the downlink scheduling DCI. Therefore, the UE can estimate the number of bits of the DCI based on the larger of the maximum uplink TB transmitting number and the maximum downlink TB transmitting number set by the base station, and takes the estimated number of bits as the preset blind detection bit number to perform the blind detection on the uplink scheduling DCI and downlink scheduling DCI on the PDCCH. The larger of the maximum uplink TB transmitting number and the maximum downlink TB transmitting number set by the base station can be sent by the base station to the UE through a high-layer signaling or the like.

For example, the maximum uplink TB transmitting number reported by the UE is 8, the maximum downlink TB transmitting number reported by the UE is 4, the maximum uplink TB transmitting number set by the base station is 4, and the maximum downlink TB transmitting number set by the base station is 2. In this case, the base station can configure the uplink scheduling DCI and the downlink scheduling DCI based on the maximum uplink TB transmitting number set by the base station.

The UE also estimates the number of bits of the DCI based on the maximum uplink TB transmitting number set by the base station and uses the estimated number of bits as the preset blind detection bit number to perform the blind detection on the uplink scheduling DCI and downlink scheduling DCI on the PDCCH.

When performing the TB scheduling, the base station configures the uplink scheduling DCI and the downlink scheduling DCI to include the NDI and the HARQ process number of the actually scheduled TBs, and sends the uplink scheduling DCI and the downlink scheduling DCI to the UE. The UE receives or sends the TBs based on the number of actually scheduled TBs.

When both the uplink and downlink of the UE support the multi-TB transmission, but the maximum uplink TB transmitting number reported by the UE is different from the maximum downlink TB transmitting number reported by the UE, and the maximum uplink TB transmitting number set by the base station for the UE is different from the maximum downlink TB transmitting number set by the base station for the UE, the first configuring manner or the second configuring manner can be used to set the number of bits for the uplink scheduling DCI and the downlink scheduling DCI.

When both the uplink and downlink of the UE support the multi-TB transmission, the maximum uplink TB transmitting number reported by the UE is different from the maximum downlink TB transmitting number reported by the UE, and the maximum uplink TB transmitting number set by the base station for the UE is the same as the maximum downlink TB transmitting number set by the base station for the UE, the second configuring manner may be used to set the number of bits for the uplink scheduling DCI and the downlink scheduling DCI.

When both the uplink and downlink of the UE support the multi-TB transmission, the maximum uplink TB transmitting number reported by the UE is the same as the maximum downlink TB transmitting number reported by the UE, and the maximum uplink TB transmitting number set by the base station for the UE is different from the maximum downlink TB transmitting number set by the base station for the UE, the first configuring manner can be used to set the number of bits for uplink scheduling DCI and downlink scheduling DCI.

In an embodiment, according to the configuring manner, configuring the uplink scheduling DCI and the downlink scheduling DCI of the multi-TB transmission to have the same number of bits includes: according to a third configuring manner, for the uplink scheduling DCI configured based on the maximum uplink TB transmitting number supported by the UE reported by the UE and for the downlink scheduling DCI configured based on the maximum downlink TB transmitting number supported by the UE reported by the UE, adding n bits having a preset value at predetermined positions of a shorter one having the smaller number of bits and selected from a configured uplink scheduling DCI and a configured downlink scheduling DCI, such that the number of bits of the uplink scheduling DCI is the same as the number of bits of the downlink scheduling DCI; or, according to a fourth configuring manner, for the uplink scheduling DCI configured based on the maximum uplink TB transmitting number set by the base station for the UE and for the downlink scheduling DCI configured based on the maximum downlink TB transmitting number set by the base station for the UE, adding m bits having a preset value to predetermined positions of a shorter one having the smaller number of bits and selected from a configured uplink scheduling DCI and a configured downlink scheduling DCI, such that the number of bits of the uplink scheduling DCI is the same as the number of bits of the downlink scheduling DCI.

If the uplink scheduling DCI is configured based on the maximum uplink TB transmitting number supported by the UE, and the downlink scheduling DCI is configured based on the maximum downlink TB transmitting number supported by the UE, when the maximum uplink TB transmitting number supported by the UE is different from the maximum downlink TB transmitting number, the number of bits of the uplink scheduling DCI is different from the number of bits of the downlink scheduling DCI.

If the uplink scheduling DCI is configured based on the maximum uplink TB transmitting number set by the base station, and the downlink scheduling DCI is configured based on the maximum downlink TB transmitting number set by the base station, when the maximum uplink TB transmitting number set by the base station is different from the maximum downlink TB transmitting number set by the base station, the number of bits of the uplink scheduling DCI is different from the number of bits of the downlink scheduling DCI.

At this time, the number of bits of the uplink scheduling DCI or the number of bits of the downlink scheduling DCI can be increased by adding bits having a preset value at the predetermined positions of the shorter having the smaller number of bits and selected from the uplink scheduling DCI or downlink scheduling DCI, to enable the number of bits of the uplink scheduling DCI to be the same as the number of bits of the downlink scheduling DCI.

Here, the predetermined position may be the end of the uplink scheduling DCI or the downlink scheduling DCI. The preset value can equal to "0".

If the uplink scheduling DCI is shorter than the downlink scheduling DCI, the number of bits of the uplink scheduling DCI can be increased to be consistent with the downlink scheduling DCI by adding "0" to the uplink scheduling DCI.

If the downlink scheduling DCI is shorter than the uplink scheduling DCI, the number of bits of the downlink scheduling DCI can be increased to be the same as the uplink scheduling DCI by adding "0" to the downlink scheduling DCI.

The base station and the UE negotiate in advance to configure the uplink scheduling DCI and the downlink scheduling DCI in the third configuring manner or the fourth configuring manner.

When the base station configures the uplink scheduling DCI and the downlink scheduling DC by the third configuring manner, the UE can estimate the number of bits for the DCI by using the larger of the maximum uplink TB transmitting number supported by the UE and the maximum downlink TB transmitting number supported by the UE that are reported by the UE, and takes the estimated number of bits as the preset blind detection bit number to perform the blind detection on the uplink scheduling DCI and the downlink scheduling DCI on the PDCCH.

When the base station configures the uplink scheduling DCI and the downlink scheduling DC by the fourth configuring manner, the UE can estimate the number of bits for the DCI by using the larger of the maximum uplink TB transmitting number set and the maximum downlink TB transmitting number that are set by the base station, and takes the estimated number of bits as the preset blind detection bit number to perform the blind detection on the uplink scheduling DCI and downlink scheduling DCI on the PDCCH. The larger of the maximum uplink TB transmitting number and the maximum downlink TB transmitting number set by the base station may be sent by the base station to the UE through a high-layer signaling or the like.

When i bits having the preset value are added to the predetermined positions of the uplink scheduling DCI, after the UE receives the uplink scheduling DCI, the UE can ignore the i bits added to the rear to parse the uplink scheduling DCI.

When j bits having the preset value are added to the predetermined positions of the downlink scheduling DCI, after the UE receives the downlink scheduling DCI, the UE can ignore the j bits added to the rear to parse the downlink scheduling DCI.

For example, if the uplink scheduling DCI is 30 bits and the downlink scheduling DCI is 26 bits, the base station may add 4 bits to the end of the downlink scheduling DCI such that the number of bits of the uplink scheduling DCI is the same as the number of bits of the downlink scheduling DCI. The value of the added 4 bits can equal to the preset value. After the UE receives the downlink scheduling DCI, the UE determines that 4 bits are used to increase the number of bits by reading the preset value at the rear of the downlink scheduling DCI. The UE can ignore the 4 bits added at the rear to parse the downlink scheduling DCI.

When one the uplink or the downlink of the UE supports the multi-TB transmission, but the other one supports the single-TB scheduling, the number of bits can be set for the uplink scheduling DCI or downlink scheduling DCI in a manner of adding bits.

For example, when one of the uplink and the downlink of the UE supports the multi-TB transmission, and the other one supports the single-TB scheduling, the number of bits can be set for the uplink scheduling DCI and the downlink scheduling DCI by adding bits at the predetermined positions of the DCI.

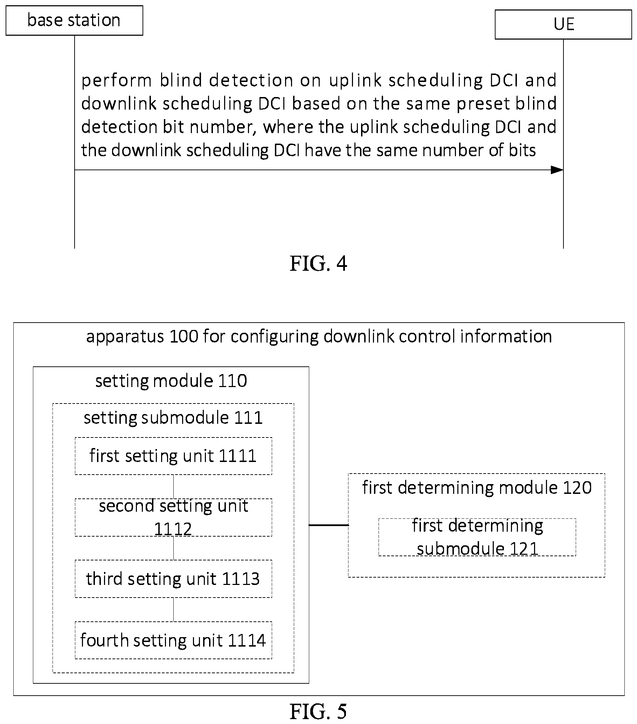

As illustrated in FIG. 4, a method for receiving downlink control information is provided in accordance with an embodiment. The method for receiving downlink control information is applied to a UE of wireless communication. The method includes the following.

At step 201, blind detection is performed on an uplink scheduling DCI and a downlink scheduling DCI of multi-TB transmission based on a preset blind detection bit number. The uplink scheduling DCI and the downlink scheduling DCI have the same number of bits.

The DCI is sent by the base station to the UE and information indicated by the DCI includes uplink and downlink resource allocation, and/or Hybrid Automatic Repeat Request (HARQ) information, and/or power control, etc. The base station can set the number of bits for the uplink scheduling DCI and the downlink scheduling DCI. The uplink scheduling DCI refers to a DCI for scheduling multiple uplink TBs for transmission. The downlink scheduling DCI refers to a DCI for scheduling multiple downlink TBs for transmission. The DCI may be sent to the UE by a base station supporting the Machine Type Communication (MTC) using PDCCH resources, where the PDCCH may be an MTC Physical Downlink Control Channel (MPDCCH).

The UE sends its own supported maximum uplink TB transmitting number and maximum downlink TB transmitting number to the base station. As another example, the base station sets the maximum uplink TB transmitting number and the maximum downlink TB transmitting number for the UE based on conditions such as actual transmission capability. When scheduling the TBs, information of actually scheduled TBs is carried in the uplink scheduling DCI or the downlink scheduling DCI and sent to the UE. Generally, the number of uplink TBs scheduled by the base station is less than or equal to the maximum uplink TB transmitting number set by the base station, and the number of downlink TBs scheduled by the base station is less than or equal to the maximum downlink TB transmitting number set by the base station.

The base station generates the uplink scheduling DCI and the downlink scheduling DCI based on the maximum uplink TB transmitting number set by the base station and the maximum downlink TB transmitting number set by the base station different from the maximum uplink TB transmitting number set by the base station. The generated DCI may include a new data indicator (NDI) and a HARQ process number of each TB. Therefore, for the maximum uplink TB transmitting number set by the base station and the maximum downlink TB transmitting number set by the base station different from the maximum uplink TB transmitting number set by the base station, the number of bits occupied by the uplink scheduling DCI and the downlink scheduling DCI are different.

Due to the difference between the uplink and downlink transmission capabilities, the maximum uplink TB transmitting number set by the base station is generally different from the maximum downlink TB transmitting number set by the base station. Therefore, the number of bits respectively set for the uplink scheduling DCI and the downlink scheduling DCI based on the maximum uplink TB transmitting number and the maximum downlink TB transmitting number that is different from the maximum uplink TB transmitting number are different from each other.

The base station sends the uplink scheduling DCI and the downlink scheduling DCI through the PDCCH resources, and the UE receives the uplink scheduling DCI and the downlink scheduling DCI on the PDCCH resources. The way that the UE receives the uplink scheduling DCI and the downlink scheduling DCI is performing blind detection on the uplink scheduling DCI and the downlink scheduling DCI on the PDCCH resources through channel decoding. The UE performs the blind detection on the DCIs based on the blind detection bit number.

Here, the base station may set the number of bits of the uplink scheduling DCI to be the same as the number of bits of the downlink scheduling DCI. For example, the uplink scheduling DCI and the downlink scheduling DCI can have the same number of bits by increasing the number of bits of a shorter of the uplink scheduling DCI and the downlink scheduling DCI through adding redundant bits. As another example, the uplink scheduling DCI can have the same number of bits as the downlink scheduling DCI by adopting a way of the fixed number of bits for the DCI.

The way that the base station sets the number of bits for the DCI may include: configuring the DCI based on the number of TBs, that is, configuring the NDI and the HARQ process number of each TB in the DCI based on the number of TBs. As another example, the way that the base station sets the number of bits for the DCI may include: adjusting the number of bits for the DCI by additionally adding bits after configuring the DCI based on the number of TBs.

When the UE performs the blind detection on the DCI, since the number of bits of the uplink scheduling DCI is the same as the number of bits of the downlink scheduling DCI, the UE determines either the number of bits of the uplink scheduling DCI or the number of bits of the downlink scheduling DCI as the preset blind detection bit number, and adopts the same preset blink detection bit number to perform the blind detection on the DCI, without adopting two different blind detection bit numbers to respectively perform the blind detection.

In this way, when the UE performs the DCI decoding, there is no need to adopt different blind detection bit numbers to perform the blind detection respectively on the uplink scheduling DCI and the downlink scheduling DCI since the number of bits of the uplink scheduling DCI is different from the number of bits of the downlink scheduling DCI, and the blind detection can be performed on the uplink scheduling DCI and the downlink scheduling DCI by adopting the same blind detection bit number, thereby reducing the number of times of operations required for obtaining the matched blink detection bit number by the UE, and improving blind detection efficiency.

The method further includes: determining the preset blind detection bit number based on the larger of the maximum uplink TB transmitting number supported by the UE and the maximum downlink TB transmitting number supported by the UE that are reported by the UE to the base station.

The base station can take the larger of the maximum uplink TB transmitting number supported by the UE and the maximum downlink TB transmitting number supported by the UE that are reported by the UE as the number of TBs used for configuring the uplink scheduling DCI and the downlink scheduling DCI.

The number of TBs actually scheduled by the base station subsequently is less than or equal to the larger of the maximum uplink TB transmitting number supported by the UE and the maximum downlink TB transmitting number supported by the UE. Therefore, setting the number of bits based on the larger of the maximum support number of uplink TBs and the maximum support number of downlink TBs will not affect subsequent actual scheduling of TBs. When actually scheduling the TBs, the base station can set information of each TB in the uplink scheduling DCI or the downlink scheduling DCI based on the actual requirements, and send the uplink scheduling DCI or downlink scheduling DCI on which the setting of the information of the TBs is completed to the UE.

The base station and the UE negotiate in advance to use a first configuring manner to configure the uplink scheduling DCI and the downlink scheduling DCI. Therefore, the UE can estimate the number of bits of the DCI based on the larger of the maximum uplink TB transmitting number supported by the UE and the maximum downlink TB transmitting number supported by the UE that are reported by the UE, and takes the estimated number of bits as the preset blind detection bit number to perform the blind detection on the uplink scheduling DCI and downlink scheduling DCI on the PDCCH.

For example, the maximum uplink TB transmitting number supported by the UE reported by the UE is 8, the maximum downlink TB transmitting number supported by the UE reported by the UE is 4, the maximum uplink TB transmitting number set by the base station is 4, and the maximum downlink TB transmitting number set by the base station is 2. In this case, the base station can configure the uplink scheduling DCI and the downlink scheduling DCI based on the maximum uplink TB transmitting number reported by the UE.

The UE also estimates the number of bits of the DCI based on the maximum uplink TB transmitting number reported by the UE, and takes the estimated number of bits as the preset blind detection bit number to perform the blind detection on the uplink scheduling DCI and downlink scheduling DCI on the PDCCH.

When performing the TB scheduling, the base station configures the uplink scheduling DCI and the downlink scheduling DCI to include the NDI and HARQ process number of the actually scheduled TBs, and sends the uplink scheduling DCI and the downlink scheduling DCI to the UE. The UE receives or sends the TBs based on the number of actually scheduled TBs.

The method further includes: determining the preset blind detection bit number based on a larger of the maximum uplink TB transmitting number and the maximum downlink TB transmitting number set by the base station for the UE.

The base station may use the larger of the maximum uplink TB transmitting number and the maximum downlink TB transmitting number set by the base station for the UE as the number of TBs for configuring the uplink scheduling DCI and downlink scheduling DCI.

The number of actually scheduled TBs by the base station subsequently is less than or equal to the larger of the maximum uplink TB transmitting number and the maximum downlink TB transmitting number set by the base station. Therefore, setting the number of bits for the DCI based on the larger of the maximum uplink TB transmitting number and the maximum downlink TB transmitting number set by the base station will not affect the subsequent actual scheduling of TBs. When actually scheduling the TBs, the base station may set the information of each TB in the uplink scheduling DCI or the downlink scheduling DCI based on the actual requirements, and send the uplink scheduling DCI or downlink scheduling DCI on which the setting of the information of the TBs is completed to the UE.

The base station and the UE negotiate in advance to use a second configuring manner to configure the uplink scheduling DCI and the downlink scheduling DCI. Therefore, the UE can estimate the number of bits of the DCI based on the larger of the maximum uplink TB transmitting number and the maximum downlink TB transmitting number set by the base station, and takes the estimated number of bits as the preset blind detection bit number to perform the blind detection on the uplink scheduling DCI and downlink scheduling DCI on the PDCCH. The larger of the maximum uplink TB transmitting number and the maximum downlink TB transmitting number set by the base station can be sent by the base station to the UE through a high-layer signaling or the like.

For example, the maximum uplink TB transmitting number reported by the UE is 8, the maximum downlink TB transmitting number reported by the UE is 4, the maximum uplink TB transmitting number set by the base station is 4, and the maximum downlink TB transmitting number set by the base station is 2. In this case, the base station can configure the uplink scheduling DCI and the downlink scheduling DCI based on the maximum uplink TB transmitting number set by the base station.

The UE also estimates the number of bits of the DCI based on the maximum uplink TB transmitting number set by the base station and uses the estimated number of bits as the preset blind detection bit number to perform the blind detection on the uplink scheduling DCI and downlink scheduling DCI on the PDCCH.

When performing the TB scheduling, the base station configures the uplink scheduling DCI and the downlink scheduling DCI to include the NDI and the HARQ process number of the actually scheduled TBs, and sends the uplink scheduling DCI and the downlink scheduling DCI to the UE. The UE receives or sends the TBs based on the number of actually scheduled TBs.

When both the uplink and downlink of the UE support the multi-TB transmission, but the maximum uplink TB transmitting number reported by the UE is different from the maximum downlink TB transmitting number reported by the UE, and the maximum uplink TB transmitting number set by the base station for the UE is different from the maximum downlink TB transmitting number set by the base station for the UE, the first configuring manner or the second configuring manner can be used to set the number of bits for the uplink scheduling DCI and the downlink scheduling DCI.

When both the uplink and downlink of the UE support the multi-TB transmission, the maximum uplink TB transmitting number reported by the UE is different from the maximum downlink TB transmitting number reported by the UE, and the maximum uplink TB transmitting number set by the base station for the UE is the same as the maximum downlink TB transmitting number set by the base station for the UE, the second configuring manner may be used to set the number of bits for the uplink scheduling DCI and the downlink scheduling DCI.

When both the uplink and downlink of the UE support the multi-TB transmission, the maximum uplink TB transmitting number reported by the UE is the same as the maximum downlink TB transmitting number reported by the UE, and the maximum uplink TB transmitting number set by the base station for the UE is different from the maximum downlink TB transmitting number set by the base station for the UE, the first configuring manner can be used to set the number of bits for uplink scheduling DCI and downlink scheduling DCI.

In one embodiment, determining the preset blind detection bit number based on the larger of the maximum uplink TB transmitting number supported by the UE and the maximum downlink TB transmitting number supported by the UE that are reported by the UE to the base station includes: for the uplink scheduling DCI configured based on the maximum uplink TB transmitting number supported by the UE reported by the UE and for the downlink scheduling DCI configured based on the maximum downlink TB transmitting number supported by the UE reported by the UE, determining the preset blind detection bit number based on the larger of the maximum uplink TB transmitting number supported by the UE and the maximum downlink TB transmitting number supported by the UE; or, for the uplink scheduling DCI configured based on the maximum uplink TB transmitting number set by the base station for the UE and for the downlink scheduling DCI configured based on the maximum downlink TB transmitting number set by the base station for the UE, determining the preset blind detection bit number based on the larger of the maximum uplink TB transmitting number set by the station for the UE and the maximum downlink TB transmitting number set by the base station for the UE.

If the uplink scheduling DCI is configured based on the maximum uplink TB transmitting number supported by the UE, and the downlink scheduling DCI is configured based on the maximum downlink TB transmitting number supported by the UE, when the maximum uplink TB transmitting number supported by the UE is different from the maximum downlink TB transmitting number, the number of bits of the uplink scheduling DCI is different from the number of bits of the downlink scheduling DCI.

If the uplink scheduling DCI is configured based on the maximum uplink TB transmitting number set by the base station, and the downlink scheduling DCI is configured based on the maximum downlink TB transmitting number set by the base station, when the maximum uplink TB transmitting number set by the base station is different from the maximum downlink TB transmitting number set by the base station, the number of bits of the uplink scheduling DCI is different from the number of bits of the downlink scheduling DCI.

At this time, the number of bits of the uplink scheduling DCI or the number of bits of the downlink scheduling DCI can be increased by adding bits having a preset value at the predetermined positions of the shorter having the smaller number of bits and selected from the uplink scheduling DCI or downlink scheduling DCI, to enable the number of bits of the uplink scheduling DCI to be the same as the number of bits of the downlink scheduling DCI.

Here, the predetermined position may be the end of the uplink scheduling DCI or the downlink scheduling DCI. The preset value can equal to "0".

If the uplink scheduling DCI is shorter than the downlink scheduling DCI, the number of bits of the uplink scheduling DCI can be increased to be consistent with the downlink scheduling DCI by adding "0" to the uplink scheduling DCI.

If the downlink scheduling DCI is shorter than the uplink scheduling DCI, the number of bits of the downlink scheduling DCI can be increased to be the same as the uplink scheduling DCI by adding "0" to the downlink scheduling DCI.

The base station and the UE negotiate in advance to configure the uplink scheduling DCI and the downlink scheduling DCI in the third configuring manner or the fourth configuring manner.

When the base station configures the uplink scheduling DCI and the downlink scheduling DC by the third configuring manner, the UE can estimate the number of bits for the DCI by using the larger of the maximum uplink TB transmitting number supported by the UE and the maximum downlink TB transmitting number supported by the UE that are reported by the UE, and takes the estimated number of bits as the preset blind detection bit number to perform the blind detection on the uplink scheduling DCI and the downlink scheduling DCI on the PDCCH.

When the base station configures the uplink scheduling DCI and the downlink scheduling DC by the fourth configuring manner, the UE can estimate the number of bits for the DCI by using the larger of the maximum uplink TB transmitting number set and the maximum downlink TB transmitting number that are set by the base station, and takes the estimated number of bits as the preset blind detection bit number to perform the blind detection on the uplink scheduling DCI and downlink scheduling DCI on the PDCCH. The larger of the maximum uplink TB transmitting number and the maximum downlink TB transmitting number set by the base station may be sent by the base station to the UE through a high-layer signaling or the like.

For example, if the uplink scheduling DCI is 30 bits and the downlink scheduling DCI is 26 bits, the base station may add 4 bits to the end of the downlink scheduling DCI such that the number of bits of the uplink scheduling DCI is the same as the number of bits of the downlink scheduling DCI. The value of the added 4 bits can equal to the preset value. After the UE receives the downlink scheduling DCI, the UE determines that 4 bits are used to increase the number of bits by reading the preset value at the rear of the downlink scheduling DCI. The UE can ignore the 4 bits added at the rear to parse the downlink scheduling DCI.

When one the uplink or the downlink of the UE supports the multi-TB transmission, but the other one supports the single-TB scheduling, the number of bits can be set for the uplink scheduling DCI or downlink scheduling DCI in a manner of adding bits.

For example, when one of the uplink and the downlink of the UE supports the multi-TB transmission, and the other one supports the single-TB scheduling, the number of bits can be set for the uplink scheduling DCI and the downlink scheduling DCI by adding bits at the predetermined positions of the DCI.

In one embodiment, the method further includes removing i bits at the predetermined positions of the uplink scheduling DCI, and reading data content of the uplink scheduling DCI from which the i bits are removed; or, removing j bits at the predetermined positions of the downlink scheduling DCI, and reading data content of the downlink scheduling DCI from which the j bits are removed.

When i bits having the preset value are added to the predetermined positions of the uplink scheduling DCI, after the UE receives the uplink scheduling DCI, the UE can ignore the i bits added at the rear to parse the uplink scheduling DCI.

When j bits having the preset value are added to the predetermined positions of the downlink scheduling DCI, after the UE receives the downlink scheduling DCI, the UE can ignore the j bits added at the rear to parse the downlink scheduling DCI.

A specific example will be provided below in conjunction with any of the above-mentioned embodiments.

In order to solve the problem that the number of bits of the uplink scheduling DCI is different from the number of bits of the downlink scheduling DCI, the following methods may be adopted to allow the number of bits of the uplink scheduling DCI to be consistent with the number of bits of the downlink scheduling DCI.

Method 1: Bits are padded to the end of the shorter DCI to align the longer DCI. For example, if the uplink scheduling DCI is 30 bits and the downlink scheduling DCI is 26 bits, 4 bits can be added to the end of the downlink scheduling DCI to keep the number of bits of the uplink scheduling DCI consistent with the number of bits of the downlink DCI scheduling DCI.

Method 2: When the capacity of the uplink scheduling DCI and the downlink scheduling DCI to support the number of scheduled TBs is inconsistent, the uplink scheduling DCI and the downlink scheduling DCI can be generated based on the largest TB number among the maximum uplink TB transmitting number and the maximum downlink TB transmitting number reported by the UE. When actually scheduling the TBs, the scheduling may be performed based on the actual configuration set by the base station. For example, when the maximum uplink TB transmitting number reported by the UE is 8, the maximum downlink TB transmitting number reported by the UE is 4, the maximum uplink TB transmitting number set by the base station is 4, and the maximum downlink TB transmitting number set by the base station is 2, the uplink scheduling DCI and downlink scheduling DCI can be generated based on the maximum uplink TB transmitting number reported by the UE. During THE actual scheduling, the number of downlink TBs actually scheduled by the base station is less than or equal to 2 and the number of uplink TBs actually scheduled by the base station is less than or equal to 4.

Method 3: When the uplink TB number set by the base station for the UE is different from the downlink TB number set by the base station for the UE, the DCIs are generated based on the largest TB number among the maximum uplink TB transmitting number set by the base station for the UE and the maximum downlink TB transmitting number set by the base station for the UE. During actual scheduling, the scheduling is performed based on the actual configuration set by the base station. For example, when the maximum uplink TB transmitting number reported by the UE is 8, the maximum downlink TB transmitting number reported by the UE is 4, the maximum uplink TB transmitting number set by the base station is 4, and the maximum downlink TB transmitting number set by the base station is 2, the uplink scheduling DCI and downlink scheduling DCI can be generated based on the maximum uplink TB transmitting number set by the base station. During the actual scheduling, the number of downlink TBs actually scheduled by the base station is less than or equal to 2, and the number of uplink TBs actually scheduled by the base station is less than or equal to 4.

In practical application, one of the above-mentioned three methods can be selected to adjust the number of DCI bits.

Which one of the alignment methods is selected can be configured by a high-layer signaling.

Different methods can be applied to different scenarios as follows.

Scenario 1: When only one of the uplink or downlink of the UE is configured to support the multi-TB transmission, and the other one is configured to support the single-TB scheduling, method 1 can be adopted at this time.

Scenario 2: When both the uplink and downlink of the UE are configured to support the multi-TB transmission, the maximum uplink TB transmitting number reported by the UE is different from the maximum downlink TB transmitting number reported by the UE, and the maximum uplink TB transmitting number set by the base station for the UE is different from the maximum downlink TB transmitting number set by the base station for the UE, the second method or the third method can be adopted.

Scenario 3: When both the uplink and downlink of the UE are configured to support the multi-TB transmission, the maximum uplink TB transmitting number reported by the UE is different from the maximum downlink TB transmitting number reported by the UE, and the maximum uplink TB transmitting number set by the base station for the UE is the same as the maximum downlink TB transmitting number set by the base station for the UE, the third method can be adopted.

Scenario 4: When both the uplink and downlink of the UE are configured to support the multi-TB transmission, the maximum uplink TB transmitting number reported by the UE is the same as the maximum downlink TB transmitting number reported by the UE, and the maximum uplink TB transmitting number set by the base station for the UE is different from the maximum downlink TB transmitting number set by the base station for the UE, the second method can be adopted.

Embodiments of the disclosure further provides an apparatus for configuring downlink control information, which is applied to a base station of wireless communication. FIG. 5 is a schematic diagram illustrating an apparatus 100 for configuring downlink control information in accordance with an embodiment of the disclosure. As illustrated in FIG. 5, the apparatus 100 includes: a setting module 110.

The setting module 110 is configured to configure an uplink scheduling DCI and a downlink scheduling DCI of multi-TB transmission to have the same number of bits.

The apparatus 100 further includes a first determining module 120.

The first determining module 120 is configured to determine a configuring manner for configuring the uplink scheduling DCI and the downlink scheduling DCI to have the same number of bits.

The setting module 110 includes a setting submodule 111.

The setting submodule 111 is configured to configure the uplink DCI and the downlink scheduling DCI of the multi-TB transmission to have the same number of bits according to the configuring manner.

The first determining module 120 includes a first determining submodule 121.

The first determining submodule 121 is configured to determine the configuring manner based on indication information, in which the indication information is sent by the UE or sent by a network element of a core network.

The setting submodule 111 includes a first setting unit 1111 or a second setting unit 1112.

The first setting unit 1111 is configured to, according to a first configuring manner, configuring the uplink scheduling DCI and the downlink scheduling DCI of the multi-TB transmission to have the same number of bits based on the larger of a maximum uplink TB transmitting number supported by the UE and a maximum downlink TB transmitting number supported by the UE that are reported by the UE.

The second setting unit 1112 is configured to according to the second configuring manner, configuring the uplink scheduling DCI and the downlink scheduling DCI of the multi-TB transmission to have the same number of bits based on the larger of the maximum uplink TB transmitting number set by the base station for the UE and the maximum downlink TB transmitting number set by the base station for the UE.

The setting submodule 111 includes a third setting unit 1113 or a fourth setting unit 1114.

The third setting unit 1113 is configured to, according to a third configuring manner, for the uplink scheduling DCI configured based on the maximum uplink TB transmitting number supported by the UE reported by the UE and for the downlink scheduling DCI configured based on the maximum downlink TB transmitting number supported by the UE reported by the UE, add n bits having a preset value at predetermined positions of a shorter one having the smaller number of bits and selected from a configured uplink scheduling DCI and a configured downlink scheduling DCI, such that the number of bits of uplink scheduling DCI is the same as the number of bits of the downlink scheduling DCI.

The fourth setting unit 1114 is configured to according to a fourth configuring manner, for the uplink scheduling DCI configured based on the maximum uplink TB transmitting number set by the base station for the UE and for the downlink scheduling DCI configured based on the maximum downlink TB transmitting number set by the base station for the UE, add m bits having a preset value at predetermined positions of a shorter one having the smaller number of bits and selected from a configured uplink scheduling DCI and a configured downlink scheduling DCI, such that the number of bits of the uplink scheduling DCI is the same as the number of bits of the downlink scheduling DCI.

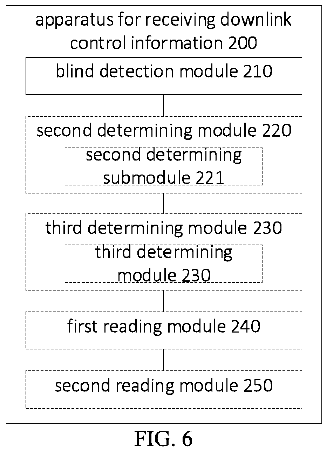

Embodiments of the disclosures further provide an apparatus for receiving downlink control information, which is applied to a user equipment of wireless communication. FIG. 6 is a schematic diagram illustrating the apparatus 200 for receiving downlink control information in accordance with an embodiment of the disclosure. As illustrated in FIG. 6, the apparatus 200 includes: a blind detection module 210.

The blind detection module 210 is configured to perform blind detection on an uplink scheduling DCI and a downlink scheduling DCI of multi-TB transmission based on a preset blind detection bit number, in which the uplink scheduling DCI and the downlink scheduling DCI have the same number of bits.

The apparatus 200 further includes a second determining module 220 or a third determining module 230.

The second determining module 220 is configured to determine the preset blind detection bit number based on a larger of a maximum uplink TB transmitting number and a maximum downlink TB transmitting number supported by the UE reported by the UE to the base station.

The third determining module 230 is configured to determine the preset blind detection bit number based on a larger of the maximum uplink TB transmitting number and the maximum downlink TB transmitting number set by the base station for the UE.

In one embodiment, the second determining module 220 includes a second determining submodule 221 or a third determining submodule 222.

The second determining submodule 221 is configured to for the uplink scheduling DCI configured based on the maximum uplink TB transmitting number supported by the UE reported by the UE and for the downlink scheduling DCI configured based on the maximum downlink TB transmitting number supported by the UE reported by the UE, determine the preset blind detection bit number based on the larger of the maximum uplink TB transmitting number and the maximum downlink TB transmitting number supported by the UE.

The third determination submodule 231 is configured for the uplink scheduling DCI configured based on the maximum uplink TB transmitting number set by the base station for the UE and for the downlink scheduling DCI configured based on the maximum downlink TB transmitting number set by the base station for the UE, determine the preset blind detection bit number based on the larger of the maximum uplink TB transmitting number and the maximum downlink TB transmitting number set by the base station for the UE.

In one embodiment, the apparatus 200 further includes a first reading module 240 or a second reading module 250.

The first reading module 240 is configured to remove i bits at the predetermined positions of the uplink scheduling DCI, and read data content of the uplink scheduling DCI from which the i bits are removed.

The second reading module 250 is configured to remove j bits at the predetermined positions of the downlink scheduling DCI, and read data content of the downlink scheduling DCI from which the j bits are removed.

In an embodiment, the setting module 110, the first determining module 120, the blind detection module 21, the second determining module 220, the third determining module 230, the first reading module 240, the second reading module 250 may be one or more central processing units (CPU), graphics processing units (GPU), baseband processors (BP), application specific integrated circuits (ASIC), DSP, Programmable Logic Devices (PLD), Complex Programmable Logic Devices (CPLD), Field-Programmable Gate Arrays (FPGA), general-purpose processors, controllers, micro controller units (MCU), microprocessors, or other electronic components for executing the aforementioned methods.

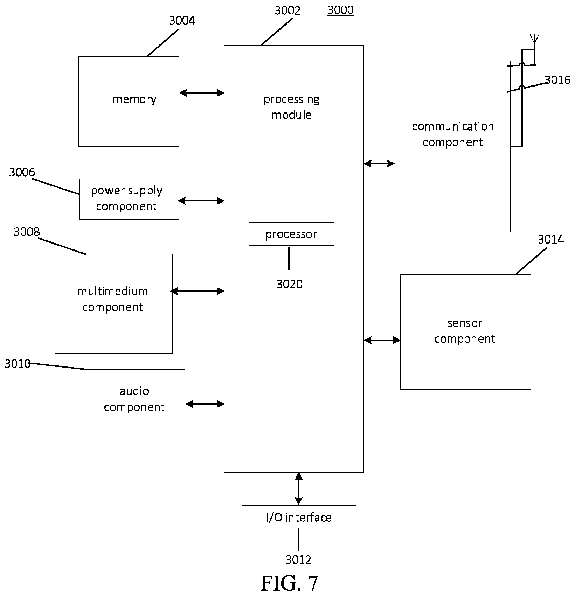

FIG. 7 is a block diagram illustrating an apparatus 3000 for configuring downlink control information or receiving downlink control information in accordance with an embodiment. For example, the apparatus 3000 may be a mobile phone, computer, digital broadcast terminal, messaging device, game console, tablet device, medical device, fitness device, personal digital assistant, and the like.

As illustrated in FIG. 7, the apparatus 3000 may include one or more of the following components: a processing component 3002, a memory 3004, a power supply component 3006, a multimedia component 3008, an audio component 3010, an input/output (I/O) interface 3012, a sensor component 3014, and a communication component 3016.

The processing component 3002 generally controls the overall operation of the apparatus 3000, such as operations associated with display, phone calls, data communications, camera operations, and recording operations. The processing component 3002 can include one or more processors 3020 to execute instructions to perform all or some of the steps of the methods described above. Additionally, processing component 3002 may include one or more modules that facilitate interaction between processing component 3002 and other components. For example, processing component 3002 may include a multimedia module to facilitate interaction between multimedia component 3008 and processing component 3002.

The memory 3004 is configured to store various types of data to support operations of the apparatus 3000. Examples of such data include instructions for any application or method operating on the apparatus 3000, contact data, phonebook data, messages, pictures, videos, and the like. Memory 3004 may be implemented by any type of volatile or non-volatile storage device or combination thereof, such as static random access memory (SRAM), electrically erasable programmable read only memory (EEPROM), erasable Programmable Read Only Memory (EPROM), Programmable Read Only Memory (PROM), Read Only Memory (ROM), Magnetic Memory, Flash Memory, Magnetic Disk or Optical Disk.

The power supply assembly 3006 provides power to various components of the apparatus 3000. Power supply components 3006 may include a power management system, one or more power supplies, and other components associated with generating, managing, and distributing power to the apparatus 3000.

The multimedia component 3008 includes a screen that provides an output interface between the apparatus 3000 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touch, swipe, and gestures on the touch panel. A touch sensor can sense not only the boundaries of a touch or swipe action, but also the duration and pressure associated with the touch or swipe action. In some embodiments, the multimedia component 3008 includes a front-facing camera and/or a rear-facing camera. When the apparatus 3000 is in an operation mode, such as a shooting mode or a video mode, the front camera and/or the rear camera may receive external multimedia data. Each of the front and rear cameras can be a fixed optical lens system or have focal length and optical zoom capability.

The audio component 3010 is configured to output and/or input audio signals. For example, audio component 3010 includes a microphone (MIC) that is configured to receive external audio signals when the apparatus 3000 is in operating modes, such as call mode, recording mode, and voice recognition mode. The received audio signal may be further stored in the memory 3004 or transmitted via the communication component 3016. In some embodiments, the audio component 3010 also includes a speaker for outputting audio signals.

The I/O interface 3012 provides an interface between the processing component 3002 and a peripheral interface module, which may be a keyboard, a click wheel, a button, and the like. These buttons may include, but are not limited to: home button, volume buttons, start button, and lock button.

The sensor assembly 3014 includes one or more sensors for providing status assessment of various aspects of the apparatus 3000. For example, the sensor component 3014 can detect the on/off state of the apparatus 3000, the relative positioning of components, such as the display and keypad of the apparatus 3000, the sensor component 3014 can also detect a change in the position of the apparatus 3000 or a component of the apparatus 3000, the user The presence or absence of contact with the apparatus 3000, the orientation or acceleration/deceleration of the apparatus 3000 and the temperature change of the apparatus 3000. Sensor assembly 3014 may include a proximity sensor configured to detect the presence of nearby objects in the absence of any physical contact. Sensor assembly 3014 may also include a light sensor, such as a CMOS or CCD image sensor, for use in imaging applications. In some embodiments, the sensor component 3014 may also include an acceleration sensor, a gyroscope sensor, a magnetic sensor, a pressure sensor, or a temperature sensor.

The communication component 3016 is configured to facilitate wired or wireless communication between the apparatus 3000 and other devices. The apparatus 3000 may access a wireless network based on a communication standard, such as Wi-Fi, 2G or 3G, or a combination thereof. In one embodiment, the communication component 3016 receives broadcast signals or broadcast related information from an external broadcast management system via a broadcast channel. In an embodiment, the communication component 3016 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an embodiment, the apparatus 3000 may be implemented by one or more application specific integrated circuits (ASICs), digital signal processors (DSPs), digital signal processing devices (DSPDs), programmable logic devices (PLDs), field programmable A gate array (FPGA), controller, microcontroller, microprocessor or other electronic component implementation for performing the above method.

According to embodiments of the disclosure, there is also provided a non-transitory computer-readable storage medium including instructions, such as a memory 3004 including instructions, which are executable by the processor 3020 of the apparatus 3000 to perform the above method. For example, the non-transitory computer-readable storage medium may be ROM, random access memory (RAM), CD-ROM, magnetic tape, floppy disk, optical data storage device, and the like.

## Claims

1. A method for configuring downlink control information, performed by a base station, comprising:
configuring (101) an uplink scheduling Downlink Control Information, DCI, and a downlink scheduling DCI of multi-Transmission Block, TB, transmission to have the same number of bits;
wherein the method further comprises: determining a configuring manner for configuring the uplink scheduling DCI and the downlink scheduling DCI to have the same number of bits;
wherein configuring (101) the uplink scheduling DCI and the downlink scheduling DCI of the multi-TB transmission to have the same number of bits comprises: according to the configuring manner, configuring the uplink scheduling DCI and the downlink scheduling DCI of the multi-TB transmission to have the same number of bits; and
being **characterized in that**, according to the configuring manner, configuring the uplink scheduling DCI and the downlink scheduling DCI of the multi-TB transmission to have the same number of bits comprises:
adding m bits having a preset value at predetermined positions to a shorter one having the smaller number of bits and selected from a configured uplink scheduling DCI and a configured downlink scheduling DCI, such that the number of bits of the uplink scheduling DCI is the same as the number of bits of the downlink scheduling DCI.

2. The method of claim 1, wherein determining the configuring manner for configuring the uplink scheduling DCI and the downlink scheduling DCI to have the same number of bits comprises:
determining the configuring manner based on indication information, wherein the indication information is sent by a user equipment (11), UE, or by a network element of a core network.

3. The method of claim 1, wherein according to the configuring manner, configuring the uplink scheduling DCI and the downlink scheduling DCI for the multi-TB transmission to have the same number of bits comprises:
according to a first configuring manner, configuring the uplink scheduling DCI and the downlink scheduling DCI of the multi-TB transmission to have the same number of bits based on the larger of a maximum uplink TB transmitting number and a maximum downlink TB transmitting number supported by the UE (11) reported by the UE (11);
or,
according to a second configuring manner, configuring the uplink scheduling DCI and the downlink scheduling DCI of the multi-TB transmission to have the same number of bits based on the larger of a maximum uplink TB transmitting number and a maximum downlink TB transmitting number set by the base station (12) for the UE (11).

4. The method of claim 1, wherein according to the configuring method, configuring the uplink scheduling DCI and the downlink scheduling DCI of the multi-TB transmission to have the same number of bits further comprises:
according to a third configuring manner, for the uplink scheduling DCI configured based on the maximum uplink TB transmitting number supported by the UE (11) reported by the UE (11) and for the downlink scheduling DCI configured based on the maximum downlink TB transmitting number supported by the UE (11) reported by the UE (11), adding the m bits having a preset value at predetermined positions of a shorter one having the smaller number of bits and selected from a configured uplink scheduling DCI and a configured downlink scheduling DCI, such that the number of bits of the uplink scheduling DCI is the same as the number of bits of the downlink scheduling DCI;
or,
according to a fourth configuring manner, for the uplink scheduling DCI configured based on the maximum uplink TB transmitting number set by the base station (12) for the UE (11) and for the downlink scheduling DCI configured based on the maximum downlink TB transmitting number set by the base station (12) for the UE (11), adding the m bits having a preset value at predetermined positions to a shorter one having the smaller number of bits and selected from a configured uplink scheduling DCI and a configured downlink scheduling DCI, such that the number of bits of the uplink scheduling DCI is the same as the number of bits of the downlink scheduling DCI.

5. A method for receiving downlink control information, performed by a user equipment, UE, comprising:
based on a preset blind detection bit number, performing blind detection on an uplink scheduling Downlink Control Information, DCI, and a downlink scheduling DCI of multi-Transmission Block, TB, transmission, wherein the uplink scheduling DCI and the downlink scheduling DCI have the same number of bits;
being **characterized in that**, the number of bits of the uplink scheduling DCI is the same as the number of bits of the downlink scheduling DCI by adding m bits having a preset value at predetermined positions to a shorter one having the smaller number of bits and selected from a configured uplink scheduling DCI and a configured downlink scheduling DCI.

6. The method of claim 5, comprising:
determining the preset blind detection bit number based on the larger of a maximum uplink TB transmitting number and a maximum downlink TB transmitting number supported by the UE (11) reported by the UE (11) to a base station (12);
or,
determining the preset blind detection bit number based on the larger of a maximum uplink TB transmitting number and a maximum downlink TB transmitting number set by a base station (12) for the UE (11).

7. The method of claim 6, wherein determining the preset blind detection bit number based on the larger of the maximum uplink TB transmitting number and the maximum downlink TB transmitting number supported by the UE (11) reported by the UE (11) to the base station (12) comprises:
for the uplink scheduling DCI configured based on the maximum uplink TB transmitting number supported by the UE (11) reported by the UE (11) and for the downlink scheduling DCI configured based on the maximum downlink TB transmitting number supported by the UE (11) reported by the UE (11), determining the preset blind detection bit number based on the larger of the maximum uplink TB transmitting number and the maximum downlink TB transmitting number supported by the UE (11);
or,
for the uplink scheduling DCI configured based on the maximum uplink TB transmitting number set by the base station (12) for the UE (11) and for the downlink scheduling DCI configured based on the maximum downlink TB transmitting number set by the base station (12) for the UE (11), determining the preset blind detection bit number based on the larger of the maximum uplink TB transmitting number and the maximum downlink TB transmitting number set by the base station (12) for the UE (11).

8. The method of claim 5 or 7, comprising:
removing i bits at predetermined positions of the uplink scheduling DCI, and reading data content of the uplink scheduling DCI from which the i bits are removed;
or,
removing j bits at predetermined positions of the downlink scheduling DCI, and reading data content of the downlink scheduling DCI from which the j bits are removed.

9. A base station (12; 100) for configuring downlink control information, comprising:
a setting module (110), configured to configure an uplink scheduling Downlink Control Information, DCI, and a downlink scheduling DCI of multi-Transmission Block, TB, transmission to have the same number of bits;
wherein the base station further comprises a first determining module configured to determine a configuring manner for configuring the uplink scheduling DCI and the downlink scheduling DCI to have the same number of bits; and
wherein the setting module (110) comprises a setting submodule configured to: according to the configuring manner, configure the uplink scheduling DCI and the downlink scheduling DCI of the multi-TB transmission to have the same number of bits; and
being **characterized in that**, the setting submodule is further configured to:
add m bits having a preset value at predetermined positions to a shorter one having the smaller number of bits and selected from a configured uplink scheduling DCI and a configured downlink scheduling DCI, such that the number of bits of the uplink scheduling DCI is the same as the number of bits of the downlink scheduling DCI.

10. A user equipment (11; 200), UE, for receiving downlink control information, comprising:
a blind detection module (210), configured to perform blind detection on an uplink scheduling Downlink Control Information, DCI, and a downlink scheduling DCI of multi-Transmission Block, TB, transmission, wherein the uplink scheduling DCI and the downlink scheduling DCI have the same number of bits;
being **characterized in that**, the number of bits of the uplink scheduling DCI is the same as the number of bits of the downlink scheduling DCI by adding m bits having a preset value at predetermined positions to a shorter one having the smaller number of bits and selected from a configured uplink scheduling DCI and a configured downlink scheduling DCI.

11. The UE of claim 10, comprising:
a second determining module (220), configured to determine the preset blind detection bit number based on the larger of a maximum uplink TB transmitting number and a maximum downlink TB transmitting number supported by the UE (11) reported by the UE (11) to a base station (12);
or,
a third determining module (230), configured to determine the preset blind detection bit number based on the larger of the maximum uplink TB transmitting number and the maximum downlink TB transmitting number set by a base station (12) for the UE (11).

12. The UE of claim 11, wherein the second determining module (220) comprises:
a second determining submodule (221), configured to for the uplink scheduling DCI configured based on the maximum uplink TB transmitting number supported by the UE (11) reported by the UE (11) and for the downlink scheduling DCI configured based on the maximum downlink TB transmitting number supported by the UE (11) reported by the UE (11), determine the preset blind detection bit number based on the larger of the maximum uplink TB transmitting number and the maximum downlink TB transmitting number supported by the UE (11);
or,
a third determining submodule, configured to for the uplink scheduling DCI configured based on the maximum uplink TB transmitting number set by the base station (12) for the UE (11) and for the downlink scheduling DCI configured based on the maximum downlink TB transmitting number set by the base station (12) for the UE (11), determine the preset blind detection bit number based on the larger of the maximum uplink TB transmitting number and the maximum downlink TB transmitting number set by the base station (12) for the UE (11).

13. The UE of claim 10 or 12, comprising:
a first reading module (240), configured to remove i bits at predetermined positions of the uplink scheduling DCI, and read data content of the uplink scheduling DCI from which the i bits are removed;
or,
a second reading module (250), configured to remove j bits at predetermined positions of the downlink scheduling DCI, and read data content of the downlink scheduling DCI from which the j bits are removed.

14. A storage medium, having executable programs stored thereon, wherein when the executable programs are executed by a processor, the method for configuring downlink control information of any one of claims 1 to 4 or the method for receiving downlink control information of any one of claims 5 to 8 is implemented.

## Patentansprüche

1. Verfahren zur Konfiguration von Downlink-Steuerungsinformationen, das von einer Basisstation durchgeführt wird, umfassend:
Konfigurieren (101) einer Uplink-Scheduling-Downlink-Steuerungsinformation, DCI, und einer Downlink-Scheduling-DCI einer Multi-Transmission-Block-, TB, Übertragung, so dass diese die gleiche Anzahl von Bits haben;
wobei das Verfahren ferner umfasst: Bestimmen einer Konfigurationsart, um die Uplink-Scheduling-DCI und die Downlink-Scheduling DCI so zu konfigurieren, dass sie die gleiche Anzahl von Bits haben;
wobei das Konfigurieren (101) der Uplink-Scheduling-DCI und der Downlink-Scheduling-DCI der Multi-TB-Übertragung, so dass diese die gleiche Anzahl von Bits haben, umfasst: entsprechend der Konfigurationsart, Konfigurieren der Uplink-Scheduling-DCI und der Downlink-Scheduling-DCI der Multi-TB-Übertragung, so dass diese die gleiche Anzahl von Bits haben; und
**dadurch gekennzeichnet, dass**, entsprechend der Konfigurationsart, das Konfigurieren der Uplink-Scheduling-DCI und der Downlink-Scheduling-DCI der Multi-TB-Übertragung, so dass diese die gleiche Anzahl von Bits haben, umfasst:
Hinzufügen von m Bits mit einem voreingestellten Wert an vorbestimmten Positionen zu einem kürzeren mit der kleineren Anzahl von Bits und ausgewählt aus einer konfigurierten Uplink-Scheduling-DCI und einer konfigurierten Downlink-Scheduling-DCI, so dass die Anzahl von Bits der Uplink-Scheduling-DCI gleich der Anzahl von Bits der Downlink-Scheduling-DCI ist.

2. Verfahren nach Anspruch 1, wobei das Bestimmen der Konfigurationsart zum Konfigurieren der Uplink-Scheduling-DCI und der Downlink-Scheduling-DCI, so dass diese die gleiche Anzahl von Bits haben, umfasst:
Bestimmen der Konfigurationsart basierend auf Anzeigeinformationen, wobei die Anzeigeinformationen von einem Endgerät (11), UE, oder von einem Netzwerkelement eines Kernnetzwerks gesendet werden.

3. Verfahren nach Anspruch 1, wobei entsprechend der Konfigurationsart das Konfigurieren der Uplink-Scheduling-DCI und der Downlink-Scheduling-DCI für die Multi-TB-Übertragung, so dass diese die gleiche Anzahl von Bits haben, umfasst:
entsprechend einer ersten Konfigurationsart, Konfigurieren der Uplink-Scheduling-DCI und der Downlink-Scheduling-DCI der Multi-TB-Übertragung,
so dass diese die gleiche Anzahl von Bits haben, basierend auf der größeren von einer maximalen Uplink-TB-Übertragungsanzahl und einer maximalen Downlink-TB-Übertragungsanzahl, die von dem UE (11) unterstützt und von dem UE (11) gemeldet werden;
oder
entsprechend einer zweiten Konfigurationsart, Konfigurieren der Uplink-Scheduling-DCI und der Downlink-Scheduling-DCI der Multi-TB-Übertragung, so dass diese die gleiche Anzahl von Bits haben, basierend auf der größeren einer maximalen Uplink-TB-Übertragungsanzahl und einer maximalen Downlink-TB-Übertragungsanzahl, die von der Basisstation (12) für das UE (11) festgelegt werden.

4. Verfahren nach Anspruch 1, wobei entsprechend der Konfigurationsart das Konfigurieren der Uplink-Scheduling-DCI und der Downlink-Scheduling-DCI der Multi-TB-Übertragung, so dass diese die gleiche Anzahl von Bits haben, ferner umfasst:
entsprechend einer dritten Konfigurationsart, für die Uplink-Scheduling-DCI, die basierend auf der von dem UE (11) gemeldeten maximalen Uplink-TB-Übertragungsanzahl konfiguriert wird, die von dem UE (11) unterstützt wird, und für die Downlink-Scheduling-DCI, die basierend auf der von dem UE (11) gemeldeten maximalen Downlink-TB-Übertragungsanzahl konfiguriert wird, die von dem UE (11) unterstützt wird, Hinzufügen der m Bits mit einem voreingestellten Wert an vorbestimmten Positionen zu einem kürzeren mit der kleineren Anzahl von Bits und ausgewählt aus einer konfigurierten Uplink-Scheduling-DCI und einer konfigurierten Downlink-Scheduling-DCI, so dass die Anzahl von Bits der Uplink-Scheduling-DCI gleich der Anzahl von Bits der Downlink-Scheduling-DCI ist;
oder
entsprechend einer vierten Konfigurationsart, für die Uplink-Scheduling-DCI, die basierend auf der von der Basisstation (12) für das UE (11) festgelegten maximalen Uplink-TB-Übertragungsanzahl konfiguriert wird, und für die Downlink-Scheduling-DCI, die basierend auf der von der Basisstation (12) für das UE (11) festgelegten maximalen Downlink-TB-Übertragungsanzahl konfiguriert wird, Hinzufügen der m Bits mit einem voreingestellten Wert an vorbestimmten Positionen zu einem kürzeren mit der kleineren Anzahl von Bits und ausgewählt aus einer konfigurierten Uplink-Scheduling-DCI und einer konfigurierten Downlink-Scheduling-DCI, so dass die Anzahl von Bits der Uplink-Scheduling-DCI gleich der Anzahl von Bits der Downlink-Scheduling-DCI ist.

5. Verfahren zum Empfangen von Downlink-Steuerungsinformationen, das von einem Endgerät, UE; durchgeführt wird, umfassend:
basierend auf einer voreingestellten Blinddetektions-Bitanzahl, Durchführen einer Blinddetektion an einer Uplink-Scheduling-Downlink-Steuerungsinformation, DCI, und einer Downlink-Scheduling-DCI einer Multi-Transmission-Block-, TB, Übertragung, wobei die Uplink-Scheduling-DCI und die Downlink-Scheduling-DCI die gleiche Anzahl von Bits haben;
**dadurch gekennzeichnet, dass** die Anzahl von Bits der Uplink-Scheduling-DCI die gleiche ist wie die Anzahl von Bits der Downlink-Scheduling-DCI, durch Hinzufügen von m Bits mit einem voreingestellten Wert an vorbestimmten Positionen zu einem kürzeren mit der kleineren Anzahl von Bits und ausgewählt aus einer konfigurierten Uplink-Scheduling-DCI und einer konfigurierten Downlink-Scheduling-DCI.

6. Verfahren nach Anspruch 5, das umfasst:
Bestimmen der voreingestellten Blinddetektions-Bitanzahl basierend auf der größeren von einer maximalen Uplink-TB-Übertragungsanzahl und einer maximalen Downlink-TB-Übertragungsanzahl, die von dem UE (11) unterstützt und von dem UE (11) an eine Basisstation (12) gemeldet werden;
oder
Bestimmen der voreingestellten Blinddetektions-Bitanzahl basierend auf der größeren von einer maximalen Uplink-TB-Übertragungsanzahl und einer maximalen Downlink-TB-Übertragungsanzahl, die von einer Basisstation (12) für das UE (11) festgelegt werden.

7. Verfahren nach Anspruch 6, wobei das Bestimmen der voreingestellten Blinddetektions-Bitanzahl basierend auf der größeren von der maximalen Uplink-TB-Übertragungsanzahl und der maximalen Downlink-TB-Übertragungsanzahl, die von dem UE (11) unterstützt und von dem UE (11) an die Basisstation (12) gemeldet werden, umfasst:
für die Uplink-Scheduling-DCI, die basierend auf der von dem UE (11) gemeldeten maximalen Uplink-TB-Übertragungsanzahl konfiguriert wird, die von dem UE (11) unterstützt wird, und für die Downlink-Scheduling-DCI, die basierend auf der von dem UE (11) gemeldeten maximalen Downlink-TB-Übertragungsanzahl konfiguriert wird, die von dem UE (11) unterstützt wird, Bestimmen der voreingestellten Blinddetektions-Bitanzahl basierend auf der größeren von der maximalen Uplink-TB-Übertragungsanzahl und der maximalen Downlink-TB-Übertragungsanzahl, die von dem UE (11) unterstützt werden;
oder
für die Uplink-Scheduling-DCI, die basierend auf der maximalen Uplink-TB-Übertragungsanzahl konfiguriert wird, die von der Basisstation (12) für das UE (11) festgelegt wird, und für die Downlink-Scheduling-DCI, die basierend auf der maximalen Downlink-TB-Übertragungsanzahl konfiguriert wird, die von der Basisstation (12) für das UE (11) festgelegt wird, Bestimmen der voreingestellten Blinddetektions-Bitanzahl basierend auf der größeren von der maximalen Uplink-TB-Übertragungsanzahl und der maximalen Downlink-TB-Übertragungsanzahl, die von der Basisstation (12) für das UE (11) festgelegt werden.

8. Verfahren nach Anspruch 5 oder 7, das umfasst:
Entfernen von i Bits an vorbestimmten Positionen der Uplink-Scheduling-DCI, und Lesen von Dateninhalt der Uplink-Scheduling-DCI, aus denen die i Bits entfernt werden;
oder
Entfernen von j Bits an vorbestimmten Positionen der Downlink-Scheduling-DCI, und Lesen von Dateninhalt der Downlink-Scheduling-DCI, aus denen die j Bits entfernt werden.

9. Basisstation (12; 100) zur Konfiguration von Downlink-Steuerungsinformationen, die aufweist:
ein Einstellungsmodul (110), das dazu ausgebildet ist, eine Uplink-Scheduling-Downlink-Steuerungsinformation, DCI, und eine Downlink-Scheduling-DCI einer Multi-Transmission-Block-, TB, Übertragung zu konfigurieren, so dass diese die gleiche Anzahl von Bits haben;
wobei die Basisstation ferner ein erstes Bestimmungsmodul aufweist, das dazu ausgebildet ist, eine Konfigurationsart zum Konfigurieren der Uplink-Scheduling-DCI und der Downlink-Scheduling-DCI zu bestimmen, so dass diese die gleiche Anzahl von Bits haben; und
wobei das Einstellungsmodul (110) ein Einstellungssubmodul aufweist, das für Folgendes ausgebildet ist: entsprechend der Konfigurationsart, Konfigurieren der Uplink-Scheduling-DCI und der Downlink-Scheduling-DCI der Multi-TB-Übertragung, so dass diese die gleiche Anzahl von Bits haben; und **dadurch gekennzeichnet, dass** das Einstellungssubmodul ferner für Folgendes ausgebildet ist:
Hinzufügen von m Bits mit einem voreingestellten Wert an vorbestimmten Positionen zu einem kürzeren mit der kleineren Anzahl von Bits und ausgewählt aus einer konfigurierten Uplink-Scheduling-DCI und einer konfigurierten Downlink-Scheduling-DCI, so dass die Anzahl von Bits der Uplink-Scheduling-DCI gleich der Anzahl von Bits der Downlink-Scheduling-DCI ist.

10. Endgerät (11; 200), UE, zum Empfangen von Downlink-Steuerungsinformationen, das aufweist:
ein Blinddetektionsmodul (210), das dazu ausgebildet ist, eine Blinddetektion an einer Uplink-Scheduling-Downlink-Steuerungsinformation, DCI, und einer Downlink-Scheduling-DCI einer Multi-Transmission-Block-, TB, Übertragung durchzuführen, wobei die Uplink-Scheduling-DCI und die Downlink-Scheduling-DCI die gleiche Anzahl von Bits haben;
**dadurch gekennzeichnet, dass** die Anzahl von Bits der Uplink-Scheduling-DCI gleich der Anzahl von Bits der Downlink-Scheduling-DCI ist, durch Hinzufügen von m Bits mit einem voreingestellten Wert an vorbestimmten Positionen zu einer kürzeren mit der kleineren Anzahl von Bits und ausgewählt aus einer konfigurierten Uplink-Scheduling-DCI und einer konfigurierten Downlink-Scheduling-DCI.

11. UE nach Anspruch 10, das aufweist:
ein zweites Bestimmungsmodul (220), das dazu ausgebildet ist, die voreingestellte Blinddetektions-Bitanzahl basierend auf der größeren von einer maximalen Uplink-TB-Übertragungsanzahl und einer maximalen Downlink-TB-Übertragungsanzahl zu bestimmen, die von der UE (11) unterstützt und von der UE (11) an eine Basisstation (12) gemeldet werden; oder
ein drittes Bestimmungsmodul (230), das dazu ausgebildet ist, die voreingestellte Blinddetektions-Bitanzahl basierend auf der größeren von einer maximalen Uplink-TB-Übertragungsanzahl und einer maximalen Downlink-TB-Übertragungsanzahl zu bestimmen, die von einer Basisstation (12) für das UE (11) festgelegt werden.

12. UE nach Anspruch 11, wobei das zweite Bestimmungsmodul (220) aufweist:
ein zweites Bestimmungssubmodul (221), das dazu ausgebildet ist, für die Uplink-Scheduling-DCI, die basierend auf der von der UE (11) gemeldeten maximalen Uplink-TB-Übertragungszahl konfiguriert wird, die von der UE (11) unterstützt wird, und für die Downlink-Scheduling-DCI, die basierend auf der von dem UE (11) gemeldeten maximalen Downlink-TB-Übertragungszahl konfiguriert wird, die von der UE (11) unterstützt wird, die voreingestellte Blinddetektions-Bitanzahl basierend auf der größeren von der maximalen Uplink-TB-Übertragungsanzahl und der maximalen Downlink-TB-Übertragungsanzahl, die von der UE (11) unterstützt werden, zu bestimmen;
oder
das dritte Bestimmungssubmodul, das dazu ausgebildet ist, für die Uplink-Scheduling-DCI, die basierend auf der maximalen Uplink-TB-Übertragungszahl konfiguriert wird, die von der Basisstation (12) für das UE (11) festgelegt wird, und für die Downlink-Scheduling-DCI, die basierend auf der maximalen Downlink-TB-Übertragungszahl konfiguriert wird, die von der Basisstation (12) für das UE (11) festgelegt wird, die voreingestellte Blinddetektions-Bitanzahl basierend auf der größeren von der maximalen Uplink-TB-Übertragungsanzahl und der maximalen Downlink-TB-Übertragungsanzahl, die von Basisstation (12) für das UE (11) eingestellt wird, zu bestimmen.

13. UE nach Anspruch 10 oder 12, das aufweist:
ein erstes Lesemodul (240), das dazu ausgebildet ist, i Bits an vorbestimmten Positionen der Uplink-Scheduling-DCI zu entfernen und den Dateninhalt der Uplink-Scheduling-DCI zu lesen, aus denen die i Bits entfernt werden;
oder
ein zweites Lesemodul (250), das dazu ausgebildet ist, j Bits an vorbestimmten Position der Downlink-Scheduling-DCI zu entfernen, und Dateninhalt der Downlink-Scheduling-DCI zu lesen, aus denen die j Bits entfernt werden.

14. Speichermedium, auf dem ausführbare Programme gespeichert sind, wobei, wenn die ausführbaren Programme von einem Prozessor ausgeführt werden, das Verfahren zur Konfiguration von Downlink-Steuerungsinformationen nach einem der Ansprüche 1 bis 4 oder das Verfahren zum Empfangen von Downlink-Steuerungsinformationen nach einem der Ansprüche 5 bis 8 implementiert wird.

## Revendications

1. Procédé permettant de configurer des informations de commande de liaison descendante, mis en œuvre par une station de base, comprenant :
la configuration (101) d'une information de commande de liaison descendante, DCI, de planification de liaison montante, et d'une DCI de planification de liaison descendante d'une transmission multi-blocs de transmission, TB, pour avoir le même nombre de bits ;
dans lequel le procédé comprend en outre : la détermination d'une manière de configuration permettant de configurer la DCI de planification de liaison montante et la DCI de planification de liaison descendante pour avoir le même nombre de bits ;
dans lequel la configuration (101) de la DCI de planification de liaison montante et de la DCI de planification de liaison descendante de la transmission multi-TB pour avoir le même nombre de bits comprend : selon la manière de configuration, la configuration de la DCI de planification de liaison montante et de la DCI de planification de liaison descendante de la transmission multi-TB pour avoir le même nombre de bits ; et
étant **caractérisé en ce que,** selon la manière de configuration, la configuration de la DCI de planification de liaison montante et de la DCI de planification de liaison descendante de la transmission multi-TB pour avoir le même nombre de bits comprend :
l'ajout de m bits ayant une valeur préréglée au niveau de positions prédéterminées à une plus courte ayant le plus petit nombre de bits et choisie parmi une DCI de planification de liaison montante configurée et une DCI de planification de liaison descendante configurée, de telle sorte que le nombre de bits de la DCI de planification de liaison montante est le même que le nombre de bits de la DCI de planification de liaison descendante.

2. Procédé selon la revendication 1, dans lequel la détermination de la manière de configuration permettant de configurer la DCI de planification de liaison montante et la DCI de planification de liaison descendante pour avoir le même nombre de bits comprend :
la détermination de la manière de configuration en fonction d'informations d'indication, dans lequel les informations d'indication sont envoyées par un équipement utilisateur (11), UE, ou par un élément de réseau d'un réseau central.

3. Procédé selon la revendication 1, dans lequel selon la manière de configuration, la configuration de la DCI de planification de liaison montante et de la DCI de planification de liaison descendante pour la transmission multi-TB pour avoir le même nombre de bits comprend :
selon une première manière de configuration, la configuration de la DCI de planification de liaison montante et de la DCI de planification de liaison descendante de la transmission multi-TB pour avoir le même nombre de bits en fonction du plus grand parmi un nombre maximal de transmissions TB en liaison montante et un nombre maximal de transmissions TB en liaison descendante pris en charge par l'UE (11) rapporté par l'UE (11) ;
ou,
selon une deuxième manière de configuration, la configuration de la DCI de planification de liaison montante et de la DCI de planification de liaison descendante de la transmission multi-TB pour avoir le même nombre de bits en fonction du plus grand parmi un nombre maximal de transmissions TB en liaison montante et un nombre maximal de transmissions TB en liaison descendante réglé par la station de base (12) pour l'UE (11).

4. Procédé selon la revendication 1, dans lequel selon le procédé de configuration, la configuration de la DCI de planification de liaison montante et de la DCI de planification de liaison descendante de la transmission multi-TB pour avoir le même nombre de bits comprend en outre :
selon une troisième manière de configuration, pour la DCI de planification de liaison montante configurée en fonction du nombre maximal de transmissions TB en liaison montante pris en charge par l'UE (11) rapporté par l'UE (11) et pour la DCI de planification de liaison descendante configurée en fonction du nombre maximal de transmissions TB en liaison descendante pris en charge par l'UE (11) rapporté par l'UE (11), l'ajout des m bits ayant une valeur préréglée au niveau de positions prédéterminées d'une plus courte ayant le plus petit nombre de bits et choisie parmi une DCI de planification de liaison montante configurée et une DCI de planification de liaison descendante configurée, de telle sorte que le nombre de bits de la DCI de planification de liaison montante est le même que le nombre de bits de la DCI de planification de liaison descendante ;
ou,
selon une quatrième manière de configuration, pour la DCI de planification de liaison montante configurée en fonction du nombre maximal de transmissions TB en liaison montante réglé par la station de base (12) pour l'UE (11) et pour la DCI de planification de liaison descendante configurée en fonction du nombre maximal de transmissions TB en liaison descendante réglé par la station de base (12) pour l'UE (11), l'ajout des m bits ayant une valeur préréglée au niveau de positions prédéterminées à une plus courte ayant le plus petit nombre de bits et choisie parmi une DCI de planification de liaison montante configurée et une DCI de planification de liaison descendante configurée, de telle sorte que le nombre de bits de la DCI de planification de liaison montante est le même que le nombre de bits de la DCI de planification de liaison descendante.

5. Procédé permettant de recevoir des informations de commande de liaison descendante, mis en œuvre par un équipement utilisateur, UE, comprenant :
en fonction d'un nombre de bits en détection aveugle préréglé, la mise en œuvre d'une détection aveugle sur une information de commande de liaison descendante, DCI, de planification de liaison montante et une DCI de planification de liaison descendante d'une transmission multi-blocs de transmission, TB, dans lequel la DCI de planification de liaison montante et la DCI de planification de liaison descendante ont le même nombre de bits ;
étant **caractérisé en ce que,** le nombre de bits de la DCI de planification de liaison montante est le même que le nombre de bits de la DCI de planification de liaison descendante en ajoutant m bits ayant une valeur préréglée au niveau de positions prédéterminées à une plus courte ayant le plus petit nombre de bits et choisie parmi une DCI de planification de liaison montante configurée et une DCI de planification de liaison descendante configurée.

6. Procédé selon la revendication 5, comprenant :
la détermination du nombre de bits en détection aveugle préréglé en fonction du plus grand parmi un nombre maximal de transmissions TB en liaison montante et un nombre maximal de transmissions TB en liaison descendante pris en charge par l'UE (11) rapporté par l'UE (11) à une station de base (12) ;
ou,
la détermination du nombre de bits en détection aveugle préréglé en fonction du plus grand parmi un nombre maximal de transmissions TB en liaison montante et un nombre maximal de transmissions TB en liaison descendante réglé par une station de base (12) pour l'UE (11).

7. Procédé selon la revendication 6, dans lequel la détermination du nombre de bits en détection aveugle préréglé en fonction du plus grand parmi le nombre maximal de transmissions TB en liaison montante et le nombre maximal de transmissions TB en liaison descendante pris en charge par l'UE (11) rapporté par l'UE (11) à la station de base (12) comprend :
pour la DCI de planification de liaison montante configurée en fonction du nombre maximal de transmissions TB en liaison montante pris en charge par l'UE (11) rapporté par l'UE (11) et pour la DCI de planification de liaison descendante configurée en fonction du nombre maximal de transmissions TB en liaison descendante pris en charge par l'UE (11) rapporté par l'UE (11), la détermination du nombre de bits en détection aveugle préréglé en fonction du plus grand parmi le nombre maximal de transmissions TB en liaison montante et le nombre maximal de transmissions TB en liaison descendante pris en charge par l'UE (11) ;
ou,
pour la DCI de planification de liaison montante configurée en fonction du nombre maximal de transmissions TB en liaison montante réglé par la station de base (12) pour l'UE (11) et pour la DCI de planification de liaison descendante configurée en fonction du nombre maximal de transmissions TB en liaison descendante réglé par la station de base (12) pour l'UE (11), la détermination du nombre de bits en détection aveugle préréglé en fonction du plus grand parmi le nombre maximal de transmissions TB en liaison montante et le nombre maximal de transmissions TB en liaison descendante réglé par la station de base (12) pour l'UE (11).

8. Procédé selon la revendication 5 ou 7, comprenant :
le retrait de i bits au niveau de positions prédéterminées de la DCI de planification de liaison montante, et la lecture de contenu de données de la DCI de planification de liaison montante de laquelle les i bits sont retirés ;
ou,
le retrait de j bits au niveau de positions prédéterminées de la DCI de planification de liaison descendante, et la lecture de contenu de données de la DCI de planification de liaison descendante de laquelle les j bits sont retirés.

9. Station de base (12 ; 100) permettant de configurer des informations de commande de liaison descendante, comprenant :
un module de réglage (110), configuré pour configurer une information de commande de liaison descendante, DCI, de planification de liaison montante et une DCI de planification de liaison descendante d'une transmission multi-blocs de transmission, TB, pour avoir le même nombre de bits ;
dans laquelle la station de base comprend en outre un premier module de détermination configuré pour déterminer une manière de configuration permettant de configurer la DCI de planification de liaison montante et la DCI de planification de liaison descendante pour avoir le même nombre de bits ; et
dans laquelle le module de réglage (110) comprend un sous-module de réglage configuré pour : selon la manière de configuration, configurer la DCI de planification de liaison montante et la DCI de planification de liaison descendante de la transmission multi-TB pour avoir le même nombre de bits ; et
étant **caractérisée en ce que,** le sous-module de réglage est configuré en outre pour :
ajouter m bits ayant une valeur préréglée au niveau de positions prédéterminées à une plus courte ayant le plus petit nombre de bits et choisie parmi une DCI de planification de liaison montante configurée et une DCI de planification de liaison descendante configurée, de telle sorte que le nombre de bits de la DCI de planification de liaison montante est le même que le nombre de bits de la DCI de planification de liaison descendante.

10. Équipement utilisateur (11 ; 200), UE, permettant de recevoir des informations de commande de liaison descendante, comprenant :
un module de détection aveugle (210), configuré pour mettre en œuvre une détection aveugle sur une information de commande de liaison descendante, DCI, de planification de liaison montante et une DCI de planification de liaison descendante d'une transmission multi-blocs de transmission, TB, dans lequel la DCI de planification de liaison montante et la DCI de planification de liaison descendante ont le même nombre de bits ;
étant **caractérisé en ce que,** le nombre de bits de la DCI de planification de liaison montante est le même que le nombre de bits de la DCI de planification de liaison descendante en ajoutant m bits ayant une valeur préréglée au niveau de positions prédéterminées à une plus courte ayant le plus petit nombre de bits et choisie parmi une DCI de planification de liaison montante configurée et une DCI de planification de liaison descendante configurée.

11. UE selon la revendication 10, comprenant :
un deuxième module de détermination (220), configuré pour déterminer le nombre de bits en détection aveugle préréglé en fonction du plus grand parmi un nombre maximal de transmissions TB en liaison montante et un nombre maximal de transmissions TB en liaison descendante pris en charge par l'UE (11) rapporté par l'UE (11) à une station de base (12) ;
ou,
un troisième module de détermination (230), configuré pour déterminer le nombre de bits en détection aveugle préréglé en fonction du plus grand parmi le nombre maximal de transmissions TB en liaison montante et le nombre maximal de transmissions TB en liaison descendante réglé par une station de base (12) pour l'UE (11).

12. UE selon la revendication 11, dans lequel le deuxième module de détermination (220) comprend :
un deuxième sous-module de détermination (221), configuré, pour la DCI de planification de liaison montante configurée en fonction du nombre maximal de transmissions TB en liaison montante pris en charge par l'UE (11) rapporté par l'UE (11) et pour la DCI de planification de liaison descendante configurée en fonction du nombre maximal de transmissions TB en liaison descendante pris en charge par l'UE (11) rapporté par l'UE (11), pour déterminer le nombre de bits en détection aveugle préréglé en fonction du plus grand parmi le nombre maximal de transmissions TB en liaison montante et le nombre maximal de transmissions TB en liaison descendante pris en charge par l'UE (11) ;
ou,
un troisième sous-module de détermination, configuré, pour la DCI de planification de liaison montante configurée en fonction du nombre maximal de transmissions TB en liaison montante réglé par la station de base (12) pour l'UE (11) et pour la DCI de planification de liaison descendante configurée en fonction du nombre maximal de transmissions TB en liaison descendante réglé par la station de base (12) pour l'UE (11), pour déterminer le nombre de bits en détection aveugle préréglé en fonction du plus grand parmi le nombre maximal de transmissions TB en liaison montante et le nombre maximal de transmissions TB en liaison descendante réglé par la station de base (12) pour l'UE (11).

13. UE selon la revendication 10 ou 12, comprenant :
un premier module de lecture (240), configuré pour retirer i fragments au niveau de positions prédéterminées de la DCI de planification de liaison montante, et lire un contenu de données de la DCI de planification de liaison montante de laquelle les i bits sont retirés ;
ou,
un second module de lecture (250), configuré pour retirer j bits au niveau de positions prédéterminées de la DCI de planification de liaison descendante, et lire un contenu de données de la DCI de planification de liaison descendante de laquelle les j bits sont retirés.

14. Support de stockage, sur lequel sont stockés des programmes exécutables, dans lequel lorsque les programmes exécutables sont exécutés par un processeur, le procédé permettant de configurer des informations de commande de liaison descendante selon l'une quelconque des revendications 1 à 4 ou le procédé permettant de recevoir des informations de commande de liaison descendante selon l'une quelconque des revendications 5 à 8 est implémenté.
